# EUROPÄISCHE PATENTSCHRIFT

(11) **EP 1 384 331 B1**
(45) Veröffentlichungstag und Bekanntmachung des Hinweises auf die Patenterteilung: **16.03.2005**
(21) Anmeldenummer: 02732333.6
(22) Anmeldetag: 19.03.2002
(51) Int. Cl.: H04B 3/54

(54) **VERFAHREN UND VORRICHTUNG ZUR DATENEINGABE IN EINE ELEKTRONISCHE DATENVERARBEITUNGSEINRICHTUNG**
METHOD AND DEVICE FOR INPUTTING DATA INTO AN ELECTRONIC DATA PROCESSING DEVICE
PROCEDE ET DISPOSITIF D'ENTREE DE DONNEES DANS UN SYSTEME DE TRAITEMENT DE DONNEES ELECTRONIQUE

(30) Priorität: 20.03.2001 DE 10113601
(43) Veröffentlichungstag der Anmeldung: 28.01.2004
(73) Patentinhaber: PEPPERL + FUCHS GMBH, D-68307 Mannheim (DE)
(72) Erfinder: KUKA, Achim, 68163 Mannheim (DE); PFAFF, Georg, 67117 Limburgerhof (DE)
(74) Vertreter: Mierswa, Klaus
(86) Internationale Anmeldenummer: PCT/DE2002/000988
(87) Internationale Veröffentlichungsnummer: WO 2002/075472

(56) Entgegenhaltungen:
- DE-A- 4 111 301
- FR-A- 2 377 611
- FR-A- 2 522 428
- PATENT ABSTRACTS OF JAPAN vol. 010, no. 125 (E-402), 10. Mai 1986 (1986-05-10) & JP 60 257629 A (YAMATAKE HONEYWELL KK), 19. Dezember 1985 (1985-12-19)
- PATENT ABSTRACTS OF JAPAN vol. 010, no. 236 (E-428), 15. August 1986 (1986-08-15) & JP 61 069221 A (YAMATAKE HONEYWELL CO LTD), 9. April 1986 (1986-04-09)
- PATENT ABSTRACTS OF JAPAN vol. 1998, no. 09, 31. Juli 1998 (1998-07-31) & JP 10 107700 A (FUJITSU TEN LTD), 24. April 1998 (1998-04-24)

## Beschreibung

### Technisches Gebiet:

Die Erfindung betrifft ein Verfahren und eine Vorrichtung zur Dateneingabe in eine wenigstens ein elektronisches Gerät steuernde elektronische Datenverarbeitungseinrichtung, welche einen Eingang, einen Ausgang und einen Bezugsanschluß aufweist und in welcher ein Datenverarbeitungsprogramm in einer Schleife abläuft, das zyklisch abfragt, ob zwischen dem Eingang und dem Bezugsanschluß eine Eingangsspannung anliegt, die größer bzw. kleiner ist als ein bestimmter Schwellenwert, gemäß den Oberbegriffen der Ansprüche 1 bzw. 18.

### Stand der Technik:

Elektronische Datenverarbeitungseinrichtungen, z.B. Mikrokontroler, werden häufig zur softwaregestützten Steuerung von Geräten, z.B. von Meßgeräten oder Sensoren, eingesetzt. Für solche Aufgaben eingesetzte elektronische Datenverarbeitungseinrichtungen verfügen in vielen Fällen sowohl über einen flüchtigen Speicher, z.B. ein Register, als auch über einen nichtflüchtigen Speicher, z.B. einen EEPROM, der ein zur Steuerung und zum Betrieb des betreffenden Systems dienendes Softwareprogramm sowie evtl. weitere benötigte Daten enthält.

Falls keine Möglichkeit einer Dateneingabe in die elektronische Datenverarbeitungseinrichtung an ihrem Einsatzort besteht, ist eine nachträgliche Änderung der Speicherinhalte nicht möglich, ohne das System oder Teile davon von seinem Einsatzort zu entfernen. In Fällen, in denen das System in ein Gehäuse eingegossen ist, muß zudem für eine nachträgliche Dateneingabe das Gehäuse geöffnet und damit in der Regel zerstört werden.

In vielen Fällen ist es jedoch vorteilhaft, eine nachträgliche Dateneingabe von einem entfernten Ort aus vornehmen zu können, ohne das System vor Ort zu entfernen und ohne ein eventuell vorhandenes Gehäuse zu öffnen. Ein solcher Fall liegt z.B. vor, wenn ein System neu parametriert, kalibriert, abgeglichen oder in einen bestimmten Betriebszustand versetzt werden soll.

Beispielsweise kann es erforderlich sein, einen Mikrokontroler, der in einen induktiven Näherungssensor eingebaut ist und den Betrieb des Sensors steuert, durch Einflußnahme von einem entfernten Ort aus durch die Eingabe entsprechender Daten zu veranlassen, die Empfindlichkeit des Näherungssensors für eine bestimmte Zeitdauer zu erhöhen und danach wieder zu reduzieren, ohne den Näherungssensor oder Teile davon zu diesem Zweck demontieren und anschließend wieder an den Einsatzort verbringen zu müssen. Ebenso kann es erforderlich sein, eine unerwünschte Verschiebung eines Parameters in einem Gerät ferngesteuert neutralisieren zu können.

In anderen Fällen, z.B. bei Überwachungsanlagen, kann es wünschenswert sein, bestimmte Parameter des Systems durch eine Dateneingabe von einem entfernten Ort aus verändern zu können, ohne den Betrieb des Systems für längere Zeit zu unterbrechen.

Aufgrund der in vielen Fällen beschränkten Anzahl der für eine Dateneingabe von einem entfernten Ort aus zur Verfügung stehenden Leitungen ist hierbei die Möglichkeit einer seriellen Dateneingabe vorteilhaft, zum Beispiel über eine RS232-Schnittstelle. Nachteile dieser Methode sind der erforderliche Zusatzaufwand an Hardware und die Notwendigkeit einer zusätzlichen Datenleitung.

Eine weitere Möglichkeit einer seriellen Dateneingabe von einem entfernten Ort aus besteht darin, das System mit einer Infrarot-Schnittstelle auszurüsten, die Signale in Form elektromagnetischer Strahlung im infraroten Spektralbereich empfängt bzw. solche emittiert. Nachteile dieses Verfahrens sind der erforderliche große Hardware-Aufwand, der große Raumbedarf der erforderlichen Hardware sowie die Notwendigkeit, den Strahlengang von Verschmutzung und Hindernissen frei zu halten. Durch den letztgenannten Nachteil sind die Einsatzmöglichkeiten von Infrarot-Schnittstellen eingeschränkt.

Durch die DE 41 23 828 C2 ist ein Verfahren zur seriellen Dateneingabe in einen Sensor bekannt geworden, das auf einer Modulation der Betriebsspannung der elektronischen Datenverarbeitungseinrichtung basiert und ohne zusätzliche Datenleitungen auskommt. Nachteile dieses Verfahrens sind der große Aufwand an Hardware, die Notwendigkeit einer eigenen Demodulatorschaltung, der große Raumbedarf der Hardware, die Notwendigkeit, ein Programmiergerät in die Versorgungsleitung zwischenzuschalten sowie das Fehlen einer Möglichkeit, Daten ohne zusätzliche Leitung aus dem Sensor auszugeben.

### Technische Aufgabe:

Der Erfindung liegt die Aufgabe zugrunde, ein Verfahren und eine Vorrichtung zur Dateneingabe mit einer elektronischen Datenverarbeitungseinrichtung, die ein elektronisches Gerät wie z.B. einen Sensor steuert, von einem entfernten Ort aus bereitzustellen, damit die Datenverarbeitungseinrichtung das elektronische Gerät zum Beispiel parametriert oder abgleicht, wobei nur ein geringer Zusatzaufwand an Hardware und insbesondere außer den zur Spannungsversorgung des Gerätes notwendigen beiden elektrische Leitungen keine zusätzliche Leitung oder Veränderungen des Gehäuses des Gerätes erforderlich sein soll.

Diese Aufgabe wird erfindungsgemäß gelöst durch ein Verfahren zur Dateneingabe in eine wenigstens ein elektronisches Gerät steuernde elektronische Datenverarbeitungseinrichtung, welche einen Eingang, einen Ausgang und einen Bezugsanschluß aufweist und in welcher ein Datenverarbeitungsprogramm in einer Schleife abläuft, das zyklisch abfragt, ob eine Eingabebedingung erfüllt ist, welche entweder darin besteht, daß zwischen dem Eingang und dem Bezugsanschluß eine Eingangsspannung anliegt, deren Betrag größer ist als ein bestimmter Schwellenwert, erste Alternative, oder darin besteht, daß zwischen dem Eingang und dem Bezugsanschluß eine Eingangsspannung anliegt, deren Betrag kleiner ist als ein bestimmter Schwellenwert, zweite Alternative,
dadurch gekennzeichnet, daß
A) entweder im Fall der ersten Alternative
   a) ein Pol einer Spannungsquelle über eine Serienschaltung aus einem ersten, einem zweiten und einem dritten Widerstand an den anderen Pol der Spannungsquelle gelegt ist, wobei die am dritten Widerstand abfallende Spannung zwischen dem Eingang und dem Bezugsanschluß angelegt ist und somit die Eingangsspannung bildet,
   b) der Schwellenwert so gewählt ist, daß die Eingabebedingung dann und nur dann erfüllt ist, wenn der erste Widerstand kleiner ist als ein erster Grenzwert und der zweite Widerstand kleiner ist als ein zweiter Grenzwert,
   c) der zweite Widerstand so gesteuert wird, daß er für eine erste Zeitdauer kleiner und danach für mindestens eine zweite Zeitdauer größer ist als der zweite Grenzwert,
   d) der erste Widerstand durch den Ausgang so gesteuert wird,
      - daß, wenn eine Abfrage ergibt, daß die Eingabebedingung erfüllt ist, eine Taktung des ersten Widerstandes ausgelöst wird, welche darin besteht, daß der erste Widerstand für eine dritte Zeitdauer kleiner und danach für eine vierte Zeitdauer größer ist als ein dritter Grenzwert, und
      - daß der erste Widerstand vor und nach der Taktung ständig oder zumindest zeitweise für ein Zeitintervall, in welches mindestens eine Abfrage fällt, kleiner ist als der erste Grenzwert,
   e) und das Datenverarbeitungsprogramm nach Ende der ersten Zeitdauer aus der Anzahl der Taktungen, welche während der ersten Zeitdauer ausgelöst wurden, eine digitale Eingabeinformation bildet,
B) oder im Fall der zweiten Alternative
   a) ein Pol einer Spannungsquelle über eine Serienschaltung aus einem ersten, einem zweiten und einem dritten Widerstand an den anderen Pol der Spannungsquelle gelegt ist, wobei die am dritten Widerstand abfallende Spannung zwischen dem Eingang und dem Bezugsanschluß angelegt ist und somit die Eingangsspannung bildet,
   b) der Schwellenwert so gewählt ist, daß die Eingabebedingung dann und nur dann erfüllt ist, wenn der erste Widerstand größer ist als ein erster Grenzwert und der zweite Widerstand größer ist als ein zweiter Grenzwert,
   c) der zweite Widerstand so gesteuert wird, daß er für eine erste Zeitdauer größer und danach für mindestens eine zweite Zeitdauer kleiner ist als der zweite Grenzwert,
   d) der erste Widerstand durch den Ausgang so gesteuert wird,
      - daß, wenn eine Abfrage ergibt, daß die Eingabebedingung erfüllt ist, eine Taktung des ersten Widerstandes ausgelöst wird, welche darin besteht, daß der erste Widerstand für eine dritte Zeitdauer kleiner und danach für eine vierte Zeitdauer größer ist als ein dritter Grenzwert, und
      - daß der erste Widerstand vor und nach der Taktung ständig oder zumindest zeitweise für ein Zeitintervall, in welches mindestens eine Abfrage fällt, größer ist als der erste Grenzwert,
   e) und das Datenverarbeitungsprogramm nach Ende der ersten Zeitdauer aus der Anzahl der Taktungen, welche während der ersten Zeitdauer ausgelöst wurden, eine digitale Eingabeinformation bildet.

Die Aufgabe wird ferner gelöst durch eine Vorrichtung zur Dateneingabe in eine wenigstens ein elektronisches Gerät steuernde elektronischen Datenverarbeitungseinrichtung mit einem Eingang, einem Ausgang und einem Bezugsanschluß, in welcher ein Datenverarbeitungsprogramm in einer Schleife abläuft mit der zyklischen Abfrage, ob eine Eingabebedingung erfüllt ist, welche entweder darin besteht, daß zwischen dem Eingang und dem Bezugsanschluß eine Eingangsspannung anliegt, deren Betrag größer ist als ein bestimmter Schwellenwert, erste Alternative, oder darin besteht, daß zwischen dem Eingang und dem Bezugsanschluß eine Eingangsspannung anliegt, deren Betrag kleiner ist als ein bestimmter Schwellenwert, zweite Alternative,
dadurch gekennzeichnet, daß
A ) entweder im Fall der ersten Alternative
   a) die Vorrichtung eine Serienschaltung aus einem ersten, einem zweiten und einem dritten Widerstand aufweist, wobei ein Pol einer Spannungsquelle über die Serienschaltung an den anderen Pol der Spannungsquelle gelegt ist und die am dritten Widerstand abfallende Spannung zwischen dem Eingang und dem Bezugsanschluß angelegt ist und somit die Eingangsspannung bildet,
   b) der bestimmte Schwellenwert so gewählt ist, daß die Eingabebedingung dann und nur dann erfüllt ist, wenn der erste Widerstand kleiner ist als ein erster Grenzwert und der zweite Widerstand kleiner ist als ein zweiter Grenzwert,
   c) der zweite Widerstand so steuerbar ist, daß er für eine erste Zeitdauer kleiner und danach für mindestens eine zweite Zeitdauer größer ist als der zweite Grenzwert,
   d) der erste Widerstand durch den Ausgang so gesteuert wird,
      - daß, wenn eine Abfrage ergibt, daß die Eingabebedingung erfüllt ist, eine Taktung des ersten Widerstandes ausgelöst wird, welche darin besteht, daß der erste Widerstand für eine dritte Zeitdauer kleiner und danach für eine vierte Zeitdauer größer ist als ein dritter Grenzwert, und
      - daß der erste Widerstand vor und nach der Taktung ständig oder zumindest zeitweise für ein Zeitintervall, in welches mindestens eine Abfrage fällt, kleiner ist als der erste Grenzwert,
   e) und das Datenverarbeitungsprogramm nach Ende der ersten Zeitdauer aus der Anzahl der Taktungen, welche während der ersten Zeitdauer ausgelöst wurden, eine digitale Eingabeinformation bildet,
B) oder im Fall der zweiten Alternative
   a) die Vorrichtung eine Serienschaltung aus einem ersten, einem zweiten und einem dritten Widerstand aufweist, wobei ein Pol einer Spannungsquelle über die Serienschaltung an den anderen Pol der Spannungsquelle gelegt ist und die am dritten Widerstand abfallende Spannung zwischen dem Eingang und dem Bezugsanschluß angelegt ist und somit die Eingangsspannung bildet,
   b) der Schwellenwert so gewählt ist, daß die Eingabebedingung dann und nur dann erfüllt ist, wenn der erste Widerstand größer ist als ein erster Grenzwert und der zweite Widerstand größer ist als ein zweiter Grenzwert,
   c) der zweite Widerstand so steuerbar ist, daß er für eine erste Zeitdauer größer und danach für mindestens eine zweite Zeitdauer kleiner ist als der zweite Grenzwert,
   d) der erste Widerstand durch den Ausgang so gesteuert wird,
      - daß, wenn eine Abfrage ergibt, daß die Eingabebedingung erfüllt ist, eine Taktung des ersten Widerstandes ausgelöst wird, welche darin besteht, daß der erste Widerstand für eine dritte Zeitdauer kleiner und danach für eine vierte Zeitdauer größer ist als ein dritter Grenzwert, und
      - daß der erste Widerstand vor und nach der Taktung ständig oder zumindest zeitweise für ein Zeitintervall, in welches mindestens eine Abfrage fällt, größer ist als der erste Grenzwert,
   e) und das Datenverarbeitungsprogramm nach Ende der ersten Zeitdauer aus der Anzahl der Taktungen, welche während der ersten Zeitdauer ausgelöst wurden, eine digitale Eingabeinformation bildet.

In einer hierzu alternativen Variante besteht die Taktung des ersten Widerstandes nicht darin, daß der erste Widerstand für die dritte Zeitdauer kleiner und danach für die vierte Zeitdauer größer ist als der dritte Grenzwert, sondern umgekehrt darin, daß der erste Widerstand für die dritte Zeitdauer größer und danach für die vierte Zeitdauer kleiner ist als der dritte Grenzwert.

Erfindungsgemäß sind die beiden Pole der Spannungsquelle über eine Serienschaltung von drei Widerständen verbunden, so daß die drei Widerstände von einem Strom durchflossen werden, wobei der erste und der zweite Widerstand steuerbar sind und jeweils mindestens zwei verschiedene Werte annehmen können. Der Strom und somit die am dritten Widerstand abfallende Spannung können daher durch entsprechendes Steuern des ersten und des zweiten Widerstandes beeinflußt werden. Die am dritten Widerstand abfallende Spannung, d.h. die Eingangsspannung, liegt über oder unter dem bestimmten Schwellenwert, je nachdem, wie der erste und der zweite Widerstand gesteuert werden. Die Eingabebedingung ist erfüllt, wenn der Betrag der Eingangsspannung über bzw. unter dem bestimmten Schwellenwert liegt.

Eine Überwachung und Begrenzung des Stromes, welchen das elektronische Gerät der Spannungsquelle entnimmt, kann vorteilhaft sein, beispielsweise zur Kurzschlußüberwachung. Diese Aufgabe kann mit Hilfe der Erfindung vorteilhaft durch das elektronische Gerät selbst ausgeführt werden, indem der am dritten Widerstand erfolgende Spannungsabfall bei jeder Abfrage mit einem vorgegebenen Maximalwert verglichen wird, und bei Überschreiten des Maximalwertes der ersten Widerstand über den Ausgang so gesteuert wird, daß der Maximalwert wieder unterschritten wird. Ferner kann der Ausgang den ersten Widerstand nach einer gewissen Zeit so steuern, daß dieser wieder kleiner ist als der dritte Grenzwert, um festzustellen, ob der Maximalwert erneut - da z.B. der Kurzschluß immer noch vorliegt - überschritten wird, oder nicht.

Ein solches Verhalten ist einer Vielzahl von industriell eingesetzten Sensoren und anderen Geräten als von vornherein vorgesehene Kurzschluß-Sicherung serienmäßig zu eigen und wird als Kurzschluß-Takt-Verhalten oder Kurzschluß-Taktung bezeichnet. Bei derartig eingerichteten Geräten wird Verhalten wird die Kurzschluß-Taktung durch Kurzschließen des zweiten Widerstandes automatisch ausgelöst.

Die Kurzschlußtaktung kann zur erfindungsgemäßen Taktung des ersten Widerstandes besonders vorteilhaft ausgenutzt werden. Gemäß einer bevorzugten Variante beträgt der zweite Widerstand im Fall der ersten Alternative während der ersten Zeitdauer näherungsweise Null Ohm, vorzugsweise weniger als 0,1 Ohm, um den die Kurzschluß-Taktung auslösenden Kurzschluß gezielt herbeizuführen.

Im Fall der zweiten Alternative kann der zweite Widerstand während der zweiten Zeitdauer näherungsweise Null Ohm, vorzugsweise weniger als 0,1 Ohm betragen.

In einer Ausführungsform der Erfindung ist der erste Widerstand zwischen dem zweiten und dem dritten Widerstand geschaltet. In einer alternativen Ausführungsform der Erfindung ist der dritte Widerstand zwischen dem ersten und dem zweiten Widerstand geschaltet.

Das Softwareprogramm fragt in zyklischer Folge ab, ob die Eingabebedingung erfüllt ist oder nicht. Eine Dateneingabe kann nur dann erfolgen, wenn die Abfrage ergibt, daß die Eingabebedingung erfüllt ist. Dies ist erfindungsgemäß nur dann der Fall, wenn der erste Widerstand kleiner bzw. größer ist als der erste Grenzwert und zugleich der zweite Widerstand kleiner bzw. größer ist als der zweite Grenzwert. Der zweite Widerstand kann sich insbesondere an einem von der elektronischen Datenverarbeitungseinrichtung entfernten Ort befinden und von dort aus gesteuert werden.

In einer Ausführungsform der Erfindung ist die Eingabebedingung nur dann erfüllt, wenn der Betrag der Eingangsspannung größer ist als der bestimmte Schwellenwert. In einer alternativen Ausführungsform der Erfindung ist die Eingabebedingung nur dann erfüllt, wenn der Betrag der Eingangsspannung kleiner ist als der bestimmte Schwellenwert.

Falls eine Abfrage ergibt, daß die Eingabebedingung erfüllt ist, steuert der Ausgang den ersten Widerstand erfindungsgemäß so, daß dieser eine Taktung ausführt, also für die dritte Zeitdauer kleiner und danach für die vierte Zeitdauer größer ist als ein dritter Grenzwert oder umgekehrt. In einer bevorzugten Ausführungsform der Erfindung sind dabei der erste und der dritte Grenzwert identisch.

Nach der Taktung ist die Eingabebedingung dann erfüllt, wenn der zweite Widerstand weiterhin kleiner bzw. größer ist als der zweite Grenzwert und der erste Widerstand kleiner bzw. größer ist als der erste Grenzwert. Das Letztere ist erfindungsgemäß ständig oder zumindest zeitweise für ein Zeitintervall, in welches mindestens eine Abfrage fällt, der Fall. Diese Abfrage ergibt daher in diesem Fall erneut, daß die Eingabebedingung erfüllt ist, so daß eine neue Taktung ausgelöst wird. Daher wird so lange eine Taktung nach der anderen ausgelöst, bis die Eingabebedingung nicht mehr erfüllt. Die erste Zeitdauer kann beendet werden, indem er zweite Widerstand so gesteuert wird, daß er größer bzw. kleiner ist als der zweite Grenzwert. In diesem Fall kommen die Auslösung weiterer Taktungen und somit die Dateneingabe zum Stillstand.

Das Datenverarbeitungsprogramm bildet erfindungsgemäß nach Ende der ersten Zeitdauer aus der Anzahl der Taktungen, welche während der ersten Zeitdauer ausgelöst wurden, eine digitale Eingabeinformation, z.B. ein digitales Wort. Das Ende der ersten Zeitdauer kann von der elektronischen Datenverarbeitungseinrichtung z.B. daran erkannt werden, daß mindestens für eine bestimmte Zeitspanne keine weitere Taktung stattfindet, oder daran, daß die Eingabebedingung für mindestens die zweite Zeitdauer nicht erfüllt wurde. Gemäß einer bevorzugten Variante der Erfindung wird das Ende der ersten Zeitdauer daran erkannt, daß eine bestimmte Anzahl von Abfragen ergibt, daß die Eingabebedingung nicht mehr erfüllt ist. Gemäß dieser Variante wird das Ende der ersten Zeitdauer daran erkannt, daß die Eingabebedingung für mindestens eine bestimmte Zeitspanne oder eine bestimmte Anzahl von Abfragen nicht erfüllt ist.

Auf diese Weise können erfindungsgemäß ohne zusätzliche Leitung beliebige digitale Eingabeinformationen in die elektronische Datenverarbeitungseinrichtung eingegeben werden, welche diese Daten weiterleiten bzw. an das elektronische Gerät ausgeben kann.

Der erste Widerstand wird durch den Ausgang so gesteuert, daß er vor Beginn und nach Ende der Taktung ständig oder zeitweise kleiner bzw. größer ist als der erste Grenzwert. Auf diese Weise ist sichergestellt, daß die Eingabebedingung nicht dauerhaft dadurch unerfüllbar bleibt, daß der erste Widerstand ständig größer bzw. kleiner ist als der erste Grenzwert.

Es gibt verschiedene Möglichkeiten, den Ausgang zu veranlassen, den ersten Widerstand zeitweise so zu steuern, daß dieser kleiner bzw. größer ist als der erste Grenzwert. Falls z.B. das von der elektronischen Datenverarbeitungseinrichtung gesteuerte elektronische Gerät ein Sensor ist, der bei Auslösung ein Schaltsignal über den Ausgang ausgibt, besteht eine Möglichkeit darin, den Sensor durch gezielte Beeinflussung des von ihm erfaßten physikalischen Parameters auszulösen und das Schaltsignal zu einer entsprechenden Steuerung des ersten Widerstandes heranzuziehen.

Eine allgemein anwendbare Möglichkeit besteht darin, das Softwareprogramm so einzurichten, daß der Ausgang stets unmittelbar nach jedem Einschaltvorgang (Kaltstart) der elektronischen Datenverarbeitungseinrichtung für eine bestimmte Zeitdauer ein Schaltsignal ausgibt, welches zu einer solchen Steuerung des ersten Widerstandes herangezogen wird, daß dieser kleiner bzw. größer wird als der erste Grenzwert. Um die Ausgabe eines Schaltsignals an dem digitalen Ausgang zu bewirken, braucht in diesem Fall z.B. lediglich die Spannungsquelle kurz abgeschaltet zu werden. Eine weitere allgemein anwendbare Möglichkeit besteht darin, das Softwareprogramm so einzurichten, daß der digitale Ausgang in regelmäßigen Zeitabständen ein Schaltsignal von bestimmter Zeitdauer ausgibt, welches zu einer solchen Steuerung des ersten Widerstandes herangezogen wird, daß dieser kleiner bzw. größer wird als der erste Grenzwert.

In einer Ausführungsform der Erfindung wird der erste Widerstand vor Beginn und nach Ende einer Taktung, nicht jedoch während einer solchen so gesteuert, daß er in regelmäßigen Zeitabständen vorübergehend im Fall der ersten Alternative kleiner bzw. im Fall der zweiten Alternative größer ist als der erste Grenzwert.

Das Ergebnis von Abfragen, welche während der dritten oder vierten Zeitdauer stattfinden, werden vorzugsweise nicht zur Auslösung einer Taktung herangezogen, um zu verhindern, daß sich verschiedene Taktungen zeitlich überschneiden oder daß eine Warteschlange von ausgelösten, noch abzuarbeitenden Taktungen aufgebaut werden muß.

In einer Variante der Erfindung umfaßt die Taktung eine der vierten Zeitdauer folgende fünfte Zeitdauer, in welcher der erste Widerstand so gesteuert wird, daß er im Fall der ersten Alternative kleiner bzw. im Fall der zweiten Alternative größer ist als der erste Grenzwert, und in welche mindestens eine Abfrage fällt. Hierdurch wird vorteilhafterweise erreicht, daß noch während der laufenden Taktung eine neue Taktung ausgelöst werden kann und ein ununterbrochenes Takten zu ermöglicht wird. Insbesondere können die Summe der dritten, vierten und fünften Zeitdauer und die zwischen zwei Abfragen verstreichende Zeit jeweils konstant und miteinander identisch sein. Falls eine Mehrzahl von Abfragen in die fünfte Zeitdauer fällt, wird vorzugsweise nur die erste dieser Abfragen zur Auslösung einer Taktung herangezogen.

Die fünfte Zeitdauer muß nicht notwendigerweise von konstanter Dauer sein. Vielmehr kann die fünfte Zeitdauer z.B. sofort nach der ersten Abfrage, welche in die fünfte Zeitdauer fällt, beendet und eine neue Taktung ausgelöst werden, noch bevor die nächste Abfrage erfolgt.

In einer bevorzugten Ausführungsform erfolgt die Abfrage periodisch. In einer weiteren Ausgestaltung sind hierbei sowohl die Gesamtdauer einer Taktung, d.h. die Summe der dritten, vierten und fünften Zeitdauern, als auch die Wiederholungsperiode der Abfragen jeweils konstant und miteinander identisch. Die gegenseitige Phasenlage von Abfrage und Taktung ist dabei vorzugsweise so gewählt, daß weder während der dritten noch während der vierten Zeitdauer eine Abfrage stattfindet.

In einer bevorzugten Ausführungsform der Erfindung wird die Summe der am ersten und am dritten Widerstand abfallenden Spannungen der elektronischen Datenverarbeitungseinrichtung als Versorgungsspannung zugeführt, so daß die Dateneingabe und die Spannungsversorgung über die selben Leitungen, nämlich lediglich über die beiden zu den Polen der Spannungsquelle führenden Leitungen, erfolgen kann und zur Kommunikation somit vorteilhafterweise keine separate Leitung erforderlich ist.

Die Spannungsversorgung der elektronischen Datenverarbeitungseinrichtung kann über einen Pegelwandler erfolgen.

Die Software ist vorzugsweise so eingerichtet, daß die auf ein bestimmtes oder eine Mehrzahl bestimmter der auf diese Weise eingegebenen digitalen Eingabeinformationen auf jeweils bestimmte Weise reagiert. Die gesendeten digitalen Eingabeinformationen können z.B. Befehle, numerische Daten, Speicheradressen oder Sprungadressen sein. Das von der Datenverarbeitungseinrichtung gesteuerte elektronische Gerät kann einen nichtflüchtigen löschbaren und programmierbaren Speicher, z.B. einen EEPROM, umfassen und die Software so eingerichtet sein, daß durch die Eingabe bestimmter digitaler Eingabeinformationen der Speicherinhalt des nichtflüchtigen Speichers verändert wird. Auf diese Weise kann erreicht werden, daß bestimmte nachträglich eingegebene Daten, z.B. nachträglich an veränderte Umgebungsbedingungen angepaßte Kalibrierwerte, nach einem Neustart des Systems ohne erneute Eingabe zur Verfügung stehen. Ferner kann auf diese Weise z.B. ein Update der sogenannten Firmware, d.h. der Software, welche die elektronische Datenverarbeitungseinrichtung steuert, erfolgen.

Die Software kann ferner so eingerichtet sein, daß die elektronische Datenverarbeitungseinrichtung nur durch Senden eines vorher eindeutig definierten Codes in die Bereitschaft versetzt wird, weitere Daten zu empfangen. Das bedeutet, sie reagiert als Sperre gegen eine unbeabsichtigte, irrtümliche oder durch Störungen verursachte Eingabe von Daten zunächst nur auf ein einziges bestimmtes digitales Wort, nämlich den Code, und interpretiert dieses als Befehl "weitere Befehle und Daten entgegennehmen". In diesem Fall können erst nach Eingabe des Codewortes weitere Daten eingegeben werden.

Die Software kann ferner so eingerichtet sein, daß die elektronische Datenverarbeitungseinrichtung nach Eingabe eines weiteren bestimmten Codewortes, das als Befehl "keine weiteren Befehle oder Daten mehr entgegennehmen" interpretiert wird, wieder in den gegen ungewollte Dateneingabe gesperrten Zustand übergeht. Eine andere Möglichkeit besteht darin, die Software so einzurichten, daß das System nach dem Empfang eines bestimmten Codewortes für eine bestimmte Zeitspanne bereit ist, weitere Eingaben entgegenzunehmen, und dann selbsttätig in den gegen ungewollte Eingaben gesperrten Betriebszustand zurückkehrt.

Der erste Widerstand kann ein erster Transistor sein, dessen Basis mit dem Ausgang der elektronischen Datenverarbeitung verbunden ist. Falls der erste und der dritte Grenzwert identisch sind, kann der erste Widerstand einen ersten elektronischen Schalter und einen zu diesem in Serie geschalteten vierten sowie einen fünften Widerstand umfassen, welcher zu der Serienschaltung aus dem ersten elektronischen Schalter und dem vierten Widerstand parallel geschaltet ist. Der vierte und der fünfte Widerstand sind so gewählt, daß erste Widerstand größer ist als der erste Grenzwert, wenn der erste elektronische Schalter geöffnet ist, und umgekehrt.

Der zweite Widerstand kann z.B. ein durch einen manuell betätigten mechanischen Schalter oder Taster gesteuert werden. Selbstverständlich kann die Eingabe digitaler Worte auf diese Weise nur mit geringer Geschwindigkeit erfolgen, was jedoch für bestimmte Anwendungen ausreichend sein kann. Der zweite Widerstand kann des weiteren durch einen elektronischen Schalter oder eine Steuerlogik gesteuert werden. Der zweite Widerstand kann ferner insbesondere ein zweiter Transistor sein, der mit Hilfe einer geeigneten Einrichtung, z.B. einer Steuerlogik, einem Mikroprozessors oder einem Computer, gesteuert wird, welche z.B. Bestandteil eines Programmiergerätes sein können, das zur Dateneingabe in die elektronische Datenverarbeitungseinrichtung dient. Der zweite Widerstand kann sich vorteilhafterweise an einem von der elektronischen Datenverarbeitungseinrichtung entfernten Ort befinden.

In einer bevorzugten Variante wird der zweite Widerstand durch eine Steuerlogik gesteuert. Diese kann Bestandteil eines Programmiergerätes sein.

In einer Variante der Erfindung wird während der Dateneingabe die Anzahl der Taktungen anhand der mit jeder Taktung verbundenen Schwankung des durch den ersten, zweiten und dritten Widerstand fließenden Stromes von der Steuerlogik erfaßt und dort zur Bildung der digitalen Eingabeinformation herangezogen, so daß die digitale Eingabeinformation sowohl in der elektronischen Datenverarbeitungseinrichtung als auch in der Steuerlogik zur Verfügung steht.

Der zweite Widerstand umfaßt gemäß einer Ausführungsform der Erfindung einen zweiten elektronischen Schalter und einen zu diesem in Serie geschalteten sechsten sowie einen siebten Widerstand, welcher zu der Serienschaltung aus dem zweiten elektronischen Schalter und dem sechsten Widerstand parallel geschaltet ist. Der sechste und der siebte Widerstand sind so gewählt, daß zweite Widerstand größer ist als der zweite Grenzwert, wenn der zweite elektronische Schalter geöffnet ist, und umgekehrt.

Gemäß einer vorteilhaften Ausführungsform umfaßt der erste Widerstand einen ersten elektronischen Schalter und einen zu diesem in Serie geschalteten vierten Widerstand sowie einen fünften Widerstand, welcher zu der Serienschaltung aus dem ersten elektronischen Schalter und dem vierten Widerstand parallel geschaltet ist, wobei der vierte und der fünfte Widerstand so gewählt sind, daß erste Widerstand größer bzw. kleiner ist als der erste Grenzwert, wenn der erste elektronische Schalter geöffnet bzw. geschlossen ist, und der zweite Widerstand einen zweiten elektronischen Schalter und einen zu diesem in Serie geschalteten sechsten Widerstand sowie einen siebten Widerstand umfaßt, welcher zu der Serienschaltung aus dem zweiten elektronischen Schalter und dem sechsten Widerstand parallel geschaltet ist, wobei der sechste und der siebte Widerstand so gewählt sind, daß zweite Widerstand größer bzw. kleiner ist als der zweite Grenzwert, wenn der zweite elektronische Schalter geöffnet bzw. geschlossen ist.

Gemäß einer weiteren Ausführungsform umfaßt der erste Widerstand einen ersten Schalter und einen zu diesem in Serie geschalteten vierten Widerstand sowie einen fünften Widerstand, welcher zu der Serienschaltung aus dem ersten Schalter und dem vierten Widerstand parallel geschaltet ist, wobei der vierte und der fünfte Widerstand so gewählt sind, daß erste Widerstand größer bzw. kleiner ist als der erste Grenzwert, wenn der erste elektronische Schalter geöffnet bzw. geschlossen ist, und der zweite Widerstand einen zweiten Schalter sowie einen siebten Widerstand umfaßt, welcher zu dem zweiten Schalter parallel geschaltet ist, wobei der zweite Schalter entweder zwischen den einen Pol der Spannungsquelle und den ersten Widerstand oder zwischen den zweiten Pol der Spannungsquelle und den dritten Widerstand geschaltet ist und der siebte Widerstand so gewählt ist, daß zweite Widerstand größer bzw. kleiner ist als der zweite Grenzwert, wenn der zweite Schalter geöffnet bzw. geschlossen ist. Diese Ausführungsform entspricht dem Spezialfall, daß der sechste Widerstand näherungsweise gleich Null Ohm ist. Der Vorteil dieser Ausführungsform besteht darin, daß eine die Kurzschluß-Taktung auslösender Kurzschluß gezielt dadurch herbeigeführt werden kann, daß der zweite Schalter geschlossen wird, so daß mit Hilfe der Kurzschluß-Taktung eine Dateneingabe möglich ist. Hierdurch wird der zur Ausführung der Erfindung erforderliche Hardware-Zusatzaufwand wesentlich verringert.

Der Eingang der elektronischen Datenverarbeitungseinrichtung kann z.B. ein Schalteingang, ein Dateneingang, ein Signaleingang für analoge oder digitale Signale oder ein Interrupteingang sein.

Gemäß einer bevorzugten Ausführungsform der Erfindung ist nicht nur eine Eingabe, sondern auch eine Ausgabe von Daten ohne zusätzliche Leitung möglich. Der durch die Serienschaltung aus dem ersten, zweiten und dritten Widerstand fließende Strom ist während der dritten Zeitdauer größer bzw. kleiner als während der vierten Zeitdauer und somit aufgrund der Taktung einer Schwankung unterworfen. Daher kann die Taktung vorteilhaft auch zur Datenausgabe aus der elektronischen Datenverarbeitungseinrichtung dienen, indem der Ausgang den ersten Widerstand so steuert, daß dieser mindestens eine Taktung ausführt, damit der durch den ersten, zweiten und dritten Widerstand fließende Strom im Rhythmus der Taktung oder Taktungen Schwankungen unterliegt. Diese durch die Taktung verursachten Stromschwankungen können von der Steuerlogik erfaßt werden, wobei die Steuerlogik insbesondere aus der Anzahl der erfaßten Taktungen eine digitale Ausgabeinformation bilden kann. In einer bevorzugten Ausführungsform wird hierzu die am zweiten Widerstand abfallende Spannung abgegriffen und der Steuerlogik zugeführt. Die ausgegebenen Daten können z.B. Meßdaten eines Sensors sein.

Gemäß einer Ausführungsform der Erfindung gibt die elektronische Datenverarbeitungseinrichtung zumindest zeitweise selbsttätig Daten aus. Gemäß einer anderen Ausführungsform wird die elektronische Datenverarbeitungseinrichtung durch Eingabe entsprechender Daten dazu veranlaßt, Daten auszugeben.

Beispielsweise kann die elektronische Datenverarbeitungseinrichtung durch Eingabe eines entsprechenden Befehls zur Durchführung eines System-Selbsttests veranlaßt werden und anschließend durch Eingabe weiterer Befehle die Ergebnisse des Tests ausgeben. In einem anderen Beispiel kann ein Benutzer die elektronische Datenverarbeitungseinrichtung dazu veranlassen, den Benutzer über etwa aktuell vorliegende besondere Betriebszustände, Fehlfunktionen oder über aktuelle interne Parameter zu informieren. In einem weiteren Beispiel können durch eine entsprechende Eingabe gezielt spezielle Daten, wie z.B. den Inhalt einer bestimmten Speicheradresse, aus dem System abgerufen werden, was z.B. für eine Ferndiagnose des Systems bei Betriebsstörungen hilfreich sein kann.

Gemäß einer Variante der Erfindung kann die elektronische Datenverarbeitungseinrichtung über den Ausgang Daten ausgeben, indem der Ausgang den ersten Widerstand so steuert, daß dieser mindestens eine Taktung ausführt, so daß der durch den ersten, zweiten und dritten Widerstand fließenden Strom im Rhythmus der Taktung oder Taktungen Schwankungen unterliegt, deren Anzahl erfaßt und zur Bildung einer digitalen Ausgabeinformation herangezogen wird. Die Schwankungen können erfaßt werden, indem die am zweiten Widerstand abfallende Spannung abgegriffen wird.

Die Software kann ferner so eingerichtet sein, daß die elektronische Datenverarbeitungseinrichtung auf eine Eingabe von bestimmten digitalen Worten über den Ausgang Signale ausgibt, aufgrund derer die Reaktion des Sensors auf die Eingabe verfolgt werden kann.

Gemäß einer Ausführungsform der Erfindung ist die Ausgabe von Daten durch die elektronische Datenverarbeitungseinrichtung gesperrt, wenn die Eingabebedingung erfüllt ist, um eine Interferenz oder ein zeitliches Überschneiden der einzugebenden mit den auszugebenden Daten zu verhindern.

Die Software ist vorzugsweise so eingerichtet, daß das System durch Eingabe eines bestimmten Codewortes in einen Kommunikationsmodus versetzt wird, in welchem die Ausgabe von routinemäßigen digitalen Signalen, wie z.B. Schaltsignalen oder Meßwerten, unterbrochen ist, um eine Interferenz mit den vom System evtl. als Antwort auf eine Eingabe ausgegebenen digitalen Signalen zu vermeiden. Dabei kann der Kommunikationsmodus erst dann verlassen und die Ausgabe der routinemäßigen digitalen Signale erst dann wieder aufgenommen werden, wenn ein entsprechender Befehl eingegeben wurde. Eine andere Möglichkeit besteht darin, die Software so auszulegen, daß das System den Kommunikationsmodus selbsttätig verläßt, wenn während einer definierten Zeitspanne weitere Eingaben ausbleiben. Die Software kann dabei ferner so eingerichtet sein, daß die routinemäßig auszugebenden digitalen Signale in einem Speicher zwischengespeichert werden, solange sich das System im Kommunikationsmodus befindet.

Die Erfindung besitzt die Vorteile, dass mit ihr von einem entfernten Ort aus eine Parametrierung und ein Abgleich von Geräten, wie Sensoren mit Mikrokontrolern, ohne zusätzlichen Hardwareaufwand möglich ist, wie auch eine Kommunikation während des Betriebes stattfinden kann; ebenso kann das Gerät auch vergossen sein. Die Parametrierung eines Gerätes kann auch durch den Kunden/Anwender durchgeführt werden. Das Verfahren ist einfach zu realisieren und die Vorrichtung weist einen geringen Schaltungsaufwand auf.

Zusätzliche elektrischen Verbindungen zum Gerät sind weder für die Eingabe noch für die Ausgabe von Daten notwendig.

In einer Weiterbildung der Erfindung erfolgt die Spannungsversorgung der elektronischen Datenverarbeitungseinrichtung über einen geeigneten Pegelwandler, so daß die Betriebsspannung der elektronischen Datenverarbeitungseinrichtung nicht von der Größe des ersten, zweiten oder dritten Widerstandes abhängt.

Kurzbeschreibung der Zeichnung, in der bevorzugte Ausführungsformen der Erfindung schematisch dargestellt sind. Es zeigen:
- Fig. 1: eine schematische Schaltung zur seriellen Dateneingabe in einen Mikrokontroler gemäß einer Ausführungsform der Erfindung,
- Fig.2: eine schematische Schaltung zur seriellen Dateneingabe in einen Mikrokontroler gemäß einer weiteren Ausführungsform der Erfindung, bei welcher die Reihenfolge der Widerstände gegenüber Fig. 1 verändert ist,
- Fig. 3: eine schematische Darstellung der zeitlichen Verläufe des ersten und zweiten Widerstandes sowie der Eingangsspannung und der Zeitpunkte der Abfragen gemäß einer bevorzugten Ausführungsform der Erfindung,
- Fig. 4: eine schematische Schaltung zur seriellen Dateneingabe in einen Mikrokontroler gemäß einer weiteren Ausführungsform der Erfindung, und
- Fig. 5 und 6: schematische Schaltungen zur seriellen Dateneingabe und Datenausgabe in einen bzw. aus einem Mikrokontroler gemäß weiterer Ausführungsformen der Erfindung.

### Wege zur Ausführung:

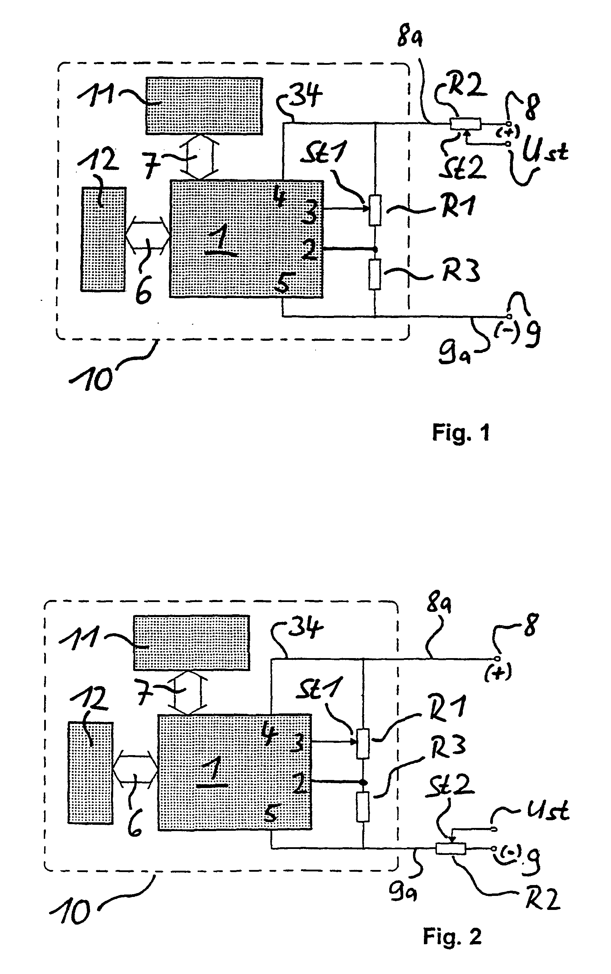

In folgenden werden verschiedene Ausführungsformen der Erfindung erläutert, in denen die elektronische Datenverarbeitungseinrichtung ein Mikrokontroler ist, welcher einen Sensor steuert. Zunächst wird auf Fig. 1 und Fig. 2 Bezug genommen, welche je ein Blockschaltbild zur seriellen Dateneingabe in einen Mikrokontroler 1 gemäß alternativer Ausführungsformen der Erfindung zeigen. Der Mikrokontroler 1 steuert einen Sensor 10 und ist über einen Bus oder Leitungen 6 mit einem Speicher 12 und über einen weiteren Bus oder Leitungen 7 mit einem Aufnehmer 11 für die durch den Sensor 10 erfaßten physikalischen Größen verbunden. Der Aufnehmer 11 kann z.B. ein induktiver Näherungsschalter oder ein elektrischer Temperaturaufnehmer sein.

Der Mikrokontroler 1 weist einen Eingang 2, einen Ausgang 3, einen Anschluß für Versorgungsspannung 4 und einen Bezugsanschluß 5 auf. Im Mikrokontroler 1 läuft ein Datenverarbeitungsprogramm in einer Schleife ab, das in einem Zyklus periodisch abfragt, ob eine Eingabebedingung erfüllt ist, welche darin besteht, daß zwischen dem Eingang 2 und dem Bezugsanschluß 5 eine Eingangsspannung Ue anliegt, deren Betrag größer ist als ein bestimmter Schwellenwert Uo. Der positive Pol 8 einer Spannungsquelle ist über eine Plusleitung 8a, eine Serienschaltung aus einem ersten, zweiten einem dritten Widerstand R1, R2, R3 und eine Minusleitung 9b an den negativen Pol 9 der Spannungsquelle gelegt, wobei der erste Widerstand R1 in der in Fig. 1 veranschaulichten Ausführungsform zwischen dem zweiten und dem dritten Widerstand R2, R3 geschaltet ist. In der in Fig. 2 veranschaulichten alternativen Ausführungsform ist der dritte Widerstand R3 zwischen dem ersten und dem zweiten Widerstand R1, R2 geschaltet. Die am dritten Widerstand R3 abfallende Spannung wird abgegriffen und ist zwischen dem Eingang 2 und dem Bezugsanschluß 5 angelegt und bildet somit die Eingangsspannung Ue. Der Sensor 10 ist lediglich über die beiden Leitungen 8a, 9a mit der Außenwelt verbunden. Weitere Leitungen sind vorteilhafterweise nicht erforderlich.

An den Anschluß für Versorgungsspannung 4 ist über eine Versorgungsleitung 34 eine Versorgungsspannung gelegt, welche im Beispiel von Fig. 1 zwischen dem ersten Widerstand R1 und dem zweiten Widerstand R2 abgegriffen wird. Die Summe der am ersten und am dritten Widerstand R1, R3 abfallenden Spannungen wird der elektronischen Datenverarbeitungseinrichtung 1 als Versorgungsspannung zugeführt. Die Versorgungsspannung ist die Potentialdifferenz zwischen dem Anschluß für Versorgungsspannung 4 und dem Bezugsanschluß 5. Der erste Widerstand R1 ist über einen ersten Steueranschluß St1, welcher an den Ausgang 3 gelegt ist, so steuerbar, daß er kleiner oder größer ist als ein erster Grenzwert G1. Der zweite Widerstand R2 ist über einen zweiten Steueranschluß St2, welcher an eine veränderbare Spannung Ust gelegt ist, so steuerbar, daß er kleiner oder größer ist als ein zweiter Grenzwert G2.

Die beiden Grenzwerte G1, G2 sind so gewählt, daß die Eingabebedingung dann und nur dann erfüllt ist, wenn der zweite Widerstand R2 kleiner ist als der zweite Grenzwert G2 und zugleich der erste Widerstand R1 kleiner ist als der erste Grenzwert G1. Nur in diesem Fall ist der durch den dritten Widerstand R3 fließende Strom groß genug, um am dritten Widerstand R3 einen Spannungsabfall Ue hervorzurufen, der größer ist als der bestimmte Schwellenwert Uo.

In weiteren Ausführungsformen der Erfindung (nicht gezeigt) ist die Polarität der Pole 8, 9 gegenüber den Figuren 1 bzw. 2 umgekehrt.

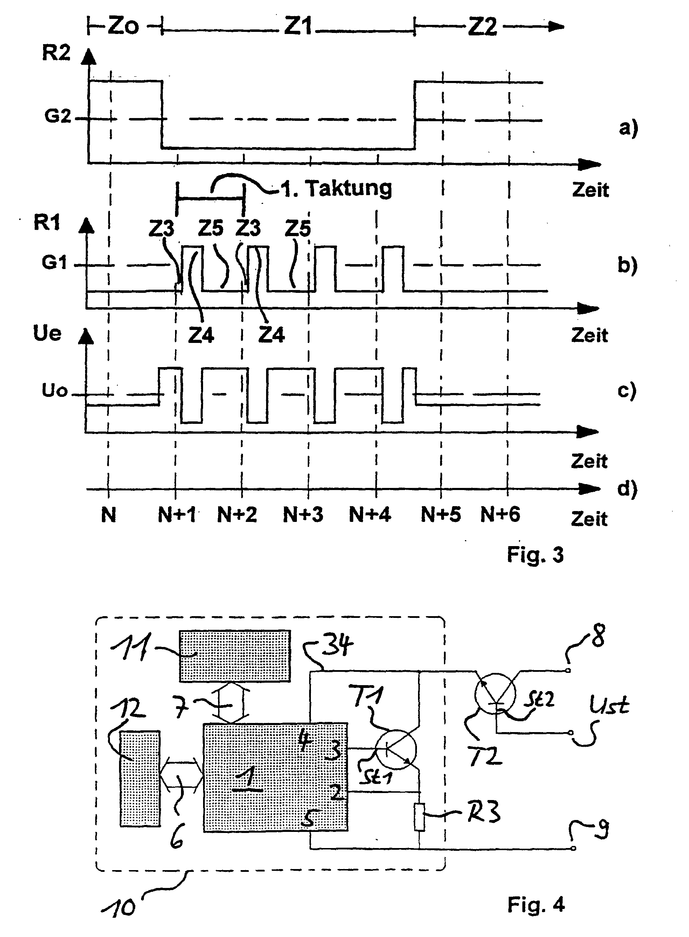

Eine erfindungsgemäße Dateneingabe in den Mikrokontroler 1 von Fig. 1 bzw. Fig. 2 wird nun beispielhaft anhand von Fig. 3 erläutert. Fig. 3 bezieht sich auf eine bevorzugte Ausführungsform der Erfindung, bei welcher eine Taktung des ersten Widerstandes R1 ausgelöst wird, wenn eine Abfrage ergibt, daß die Eingabebedingung erfüllt ist, wobei die Taktung darin besteht, daß der erste Widerstand R1 für eine dritte Zeitdauer Z3 kleiner, danach für eine vierte Zeitdauer Z4 größer und danach für eine fünfte Zeitdauer Z5 wieder kleiner ist als der erste Grenzwert G1. Der zweite Widerstand R2 wird durch die Steuerspannung Ust erfindungsgemäß so gesteuert, daß er für eine erste Zeitdauer Z1 kleiner und danach für eine zweite Zeitdauer Z2 größer ist als der zweite Grenzwert G2. D.h., die Eingabebedingung kann während der zweiten Zeitdauer Z2 nicht erfüllt sein.

Der erste Widerstand R1 wird gemäß der unter Bezug auf Fig. 3 erläuterten bevorzugten Ausführungsform der Erfindung ferner durch den Ausgang 3 so gesteuert, daß er vor Beginn und nach Ende der Taktung ständig kleiner ist als der erste Grenzwert G1. Ferner sind sowohl die Gesamtdauer einer Taktung, d.h. die Summe der dritten, vierten und fünften Zeitdauern Z3, Z4, Z5, als auch die Wiederholungsperiode der Abfragen konstant und miteinander identisch. Die gegenseitige Phasenlage von Abfrage und Taktung ist dabei so gewählt, daß während der dritten oder vierten Zeitdauer Z3, Z4 keine Abfragen stattfinden, so daß während der fünften Zeitdauer Z5 stets genau eine Abfrage stattfindet.
Das Ende der ersten Zeitdauer Z1 wird in der unter Bezug auf Fig. 3 erläuterten bevorzugten Ausführungsform der Erfindung von der elektronischen Datenverarbeitungseinrichtung 1 daran erkannt, daß eine Abfrage ergibt, daß die Eingabebedingung nicht mehr erfüllt ist.

Fig. 3a zeigt eine schematische Darstellung des zeitlichen Verlaufes des zweiten Widerstandes R2 von Fig. 1, der zunächst während einer Zeit Zo größer ist als der zweite Grenzwert G2. Zum Zeitpunkt einer Abfrage N, welche in die Zeit Zo fällt, ist die Eingabebedingung daher nicht erfüllt, so daß durch das Ergebnis der Abfrage N keine Taktung ausgelöst wird. Danach wird der zweite Widerstand R2 durch eine Spannung USt, welche an den Steuereingang St2 angelegt wird, so gesteuert, daß er für die erste Zeitdauer Z1 kleiner und danach für die zweite Zeitdauer Z2 wieder größer ist als der zweite Grenzwert G2.

Der erste Widerstand R1 wird durch den Ausgang 3 (Fig. 1, Fig. 2) so gesteuert, daß er vor Beginn und nach Ende der Taktung ständig kleiner ist als der erste Grenzwert G1 (Fig. 3b). Daher ist die Eingabebedingung sofort mit Beginn der ersten Zeitdauer Z1 erfüllt. Die folgende Abfrage N+1 (Fig. 3d) ergibt daher, daß die Eingabebedingung erfüllt ist. Somit wird nun eine erste Taktung des ersten Widerstandes R1 ausgelöst, welche darin besteht, daß der erste Widerstand für die dritte Zeitdauer Z3 kleiner, danach für die vierte Zeitdauer Z4 größer und danach für die fünfte Zeitdauer Z5 wieder kleiner ist als der erste Grenzwert G1.

Auch die nächste Abfrage N+2 und die beiden darauffolgenden Abfragen N+3, N+4 ergeben in dem unter Bezug auf Fig. 3 erläuterten Beispiel jeweils, daß die Eingabebedingung erfüllt ist, da der erste Widerstand R1 während der fünften Zeitdauern Z5 jeweils kleiner ist als der erste Grenzwert G1 und de zweite Widerstand R2 während der noch andauernden Zeitdauer Z1 weiterhin kleiner ist als der erste Grenzwert G1. Daher folgen auf die Abfragen N+2, N+3 und N+4 eine zweite, eine dritte und eine vierte Taktung.

Während der vierten Taktung läuft in dem unter Bezug auf Fig. 3 erläuterten Beispiel die erste Zeitdauer Z1 ab. Die Folge davon ist, daß die Eingabebedingung zum Zeitpunkt der nächsten Abfrage N+5 nicht mehr erfüllt ist. Daher löst die Abfrage N+5 keine weitere Taktung aus. Das Datenverarbeitungsprogramm bildet nach Ende der ersten Zeitdauer Z1 aus der Anzahl der Taktungen, welche während der ersten Zeitdauer Z1 ausgelöst wurden, eine digitale Eingabeinformation, z.B. ein digitales Wort. Gemäß einer bevorzugten Ausführungsform der Erfindung wird das Ende der ersten Zeitdauer Z1 von der elektronischen Datenverarbeitungseinrichtung 1 daran erkannt, daß eine Abfrage ergibt, daß die Eingabebedingung nicht mehr erfüllt ist.

Selbstverständlich kann anschließend eine erneute Dateneingabe nach dem oben erläuterten Schema erfolgen. Voraussetzung dafür ist, daß der zweite Widerstand R2 erneut so gesteuert wird, daß er kleiner ist als der zweite Grenzwert G2. Durch entsprechende Wahl der Anzahl der Taktungen können auf diese Weise beliebige digitale Daten eingegeben werden.

Aufgrund der Änderungen des ersten und zweiten Widerstandes R1, R2 ändert sich auch der durch den dritten Widerstand R3 fließende Strom, so daß die Eingangsspannung Ue den in Fig. 3c dargestellten Verlauf aufweist. Insbesondere ist die Eingangsspannung Ue immer dann, wenn der erste Widerstand R1 kleiner als der erste Grenzwert G1 und der zweite Widerstand R2 kleiner ist als der zweite Grenzwert G2, größer als der bestimmte Schwellen wert Uo, so daß die Eingabebedingung erfüllt ist.

Fig. 4 zeigt ein Blockschaltbild zur seriellen Dateneingabe in einen Mikrokontroler 1 gemäß einer weiteren Ausführungsform der Erfindung, in welcher der steuerbare erste Widerstand R1 von Fig. 1 durch einen ersten Transistor T1 und der steuerbare zweite Widerstand R2 von Fig. 1 durch einen zweiten Transistor T2 gebildet ist.

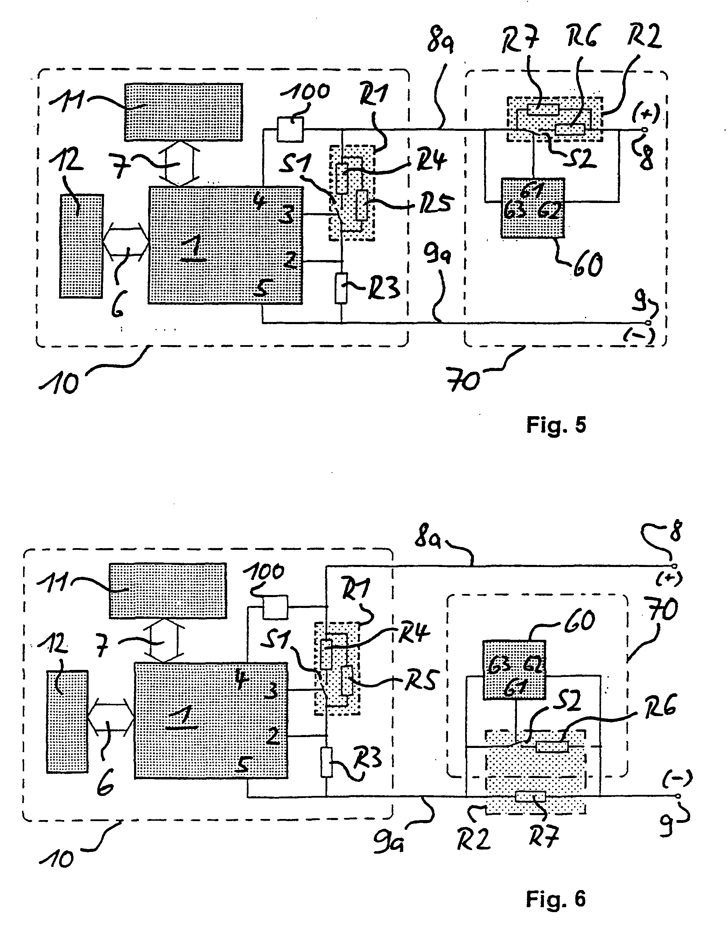

Fig. 5 zeigt ein Blockschaltbild zur seriellen Dateneingabe in den Mikrokontroler 1 gemäß einer bevorzugten Ausführungsform der Erfindung, in welcher der steuerbare erste Widerstand R1 von Fig. 1 durch einen ersten elektronischen Schalter S1 und einen zu diesem in Serie geschalteten vierten Widerstand R4 sowie einen fünften Widerstand R5 gebildet ist, welcher zu der Serienschaltung aus dem ersten elektronischen Schalter S1 und dem vierten Widerstand R4 parallel geschaltet ist. Der vierte und der fünfte Widerstand R4, R5 sind so gewählt, daß der erste Widerstand R1 größer bzw. kleiner ist als der erste Grenzwert G1, wenn der erste elektronische Schalter S1 geöffnet bzw. geschlossen ist. Der erste elektronische Schalter besitzt einen Steuereingang, welcher mit dem Ausgang 3 des Mikrokontrolers 1 verbunden ist. Der erste elektronische Schalter ist somit über den Ausgang 3 steuerbar.

Ferner ist in Fig. 5 der zweite Widerstand R2 von Fig. 1 durch einen zweiten elektronischen Schalter S2 und einen zu diesem in Serie geschalteten sechsten Widerstand R6 sowie einen siebten Widerstand R7 gebildet, welcher zu der Serienschaltung aus dem zweiten elektronischen Schalter S2 und dem sechsten Widerstand R6 parallel geschaltet ist. Der sechste und der siebte Widerstand R6, R7 sind so gewählt, daß der zweite Widerstand R2 größer bzw. kleiner ist als der erste Grenzwert G1, wenn der zweite elektronische Schalter S2 geöffnet bzw. geschlossen ist.

Der zweite elektronische Schalter S2 wird durch eine Steuerlogik 60 gesteuert, welche einen Schaltausgang 61 aufweist, der an den Steuereingang des zweiten elektronischen Schalters S2 angeschlossen ist. Der zweite elektronische Schalter S2, der sechste und der siebte Widerstand R6, R7, die Steuerlogik 60 sowie die Spannungsquelle mit dem positiven Pol 8 und dem negativen Pol 9 sind Bestandteile eines Programmiergerätes 70, welches nur über die Plusleitung 8a und die Minusleitung 9a mit dem Sensor 10 verbunden ist. Die Steuerlogik 60 ist so eingerichtet, daß sie über den Schaltausgang 61 Schaltsignale in einer den in den Mikrokontroler 1 einzugebenden Daten entsprechenden Folge abgibt. In einer bevorzugten Ausführungsform der Erfindung umfaßt die Steuerlogik 60 zu diesem Zweck eine separate Einrichtung zur elektronischen Datenverarbeitung, z.B. einen Mikroprozessor oder einen Computer, wobei die Steuerung des zweiten Widerstandes R2 mit Hilfe eines geeigneten Programmes erfolgt. Die in den Mikrokontroler 1 einzugebenden Daten können in einer bevorzugten Ausführungsform der Erfindung z.B. per Tastatur direkt in die Steuerlogik 60 eingegeben werden, oder sie können aus einem Speicher abgerufen oder innerhalb der Steuerlogik 60 softwaremäßig erzeugt werden.

Der Spannungsabfall am zweiten Widerstand R2 wird in Fig. 5 abgegriffen und zwei Eingängen 62, 63 der Steuerlogik 60 zugeführt, so daß diese in der Lage ist, den Spannungsabfall am Widerstand R2 und somit den durch den zweiten Widerstand R2 fließenden Strom z.B. durch Differenzbildung der an den Eingängen 62, 63 anliegenden Spannungen zu erfassen. Eine Taktung des ersten Widerstandes R1 bewirkt eine Schwankung des Stromes durch den zweiten Widerstand R2, welche die Steuerlogik 60 über den Differenzeingang 62, 63 erfassen kann. Somit ist die Steuerlogik 60 bei entsprechender Programmierung imstande, die Anzahl der Taktungen des ersten Widerstandes R1 bei der erfindungsgemäßen Dateneingabe mitzuzählen und auf diese Weise zu überwachen. Auf diese Weise ist es möglich, bei einer Dateneingabe die Soll-Anzahl der Taktungen, welche durch die Zeitdauer Z1 bestimmt ist, mit der tatsächlich erfoglten Ist-Anzahl der Taktungen zu vergleichen und etwaige bei der Dateneingabe auftretende Störungen oder Fehlfunktionen sofort festzustellen.

Des Weiteren kann die Erfassung des Spannungsabfalls am zweiten Widerstand R2 auch dazu dienen, eine Ausgabe von Daten aus dem Mikrokontroler 1 ohne zusätzliche Leitung zu ermöglichen, indem der Mikrokontroler über den Ausgang 3 den ersten Widerstand R1 entsprechend der auszugebenden Daten zeitabhängig steuert, beispielsweise taktet wie unter Bezug auf Fig. 2 erläutert. Auch die so verursachten Stromschwankungen können von der Steuerlogik 60 erfaßt, ausgewertet und insbesondere in digitale Worte umgesetzt werden.

Unter der Voraussetzung, daß der erste Widerstand R1 stufenlos oder in hinreichend vielen Stufen steuerbar, also z.B. ein Transistor T1 ist, besteht eine andere Möglichkeit der Datenausgabe darin, daß der Mikrokontroler 1 über seinen Ausgang 3 den ersten Widerstand R1 so steuert, daß die Größe des Stromes der jeweils auszugebenden Ausgabeinformation entspricht. Auch der dadurch verursachte zeitliche Verlauf des Stromes kann z.B. mittels eines A/D-Wandlers von der Steuerlogik 60 erfaßt, ausgewertet und insbesondere in digitale Worte umgesetzt werden.

Fig. 6 zeigt eine Ausführungsform, in welcher analog zu der unter Bezug auf Fig. 5 erläuterten Ausführungsform der erste Widerstand R1 durch einen ersten elektronischen Schalter S1 sowie zwei Widerstände R4, R5 und der zweite Widerstand R2 durch einen zweiten elektronischen Schalter S1 sowie zwei Widerstände R6, R7 gebildet ist. Im Gegensatz zu Fig. 5 ist jedoch in Fig. 6 der dritte Widerstand R3 zwischen den ersten und den zweiten Widerstand R1, R2 geschaltet. Die Reihenfolge der Widerstände R1, R2, R3 in Fig. 6 entspricht daher derjenigen von Fig. 2. Ferner sind in Fig. 6 die Pole 8, 9 der Spannungsquelle sowie der Widerstand R7 außerhalb des Programmiergerätes 70 angeordnet, was in vielen Anwendungsfällen vorteilhaft ist.

In der Praxis kann ferner eine Überwachung und Begrenzung des Stromes, welchen das elektronische Gerät 10 der Spannungsquelle entnimmt, vorteilhaft sein. Wenn z.B. der erste Widerstand R1 ein Transistor T1 ist (Fig. 4), kann eine Begrenzung des Stromes zum Schutz des Transistors T1 etwa gegen Kurzschluß zweckmäßig sein. Diese Aufgabe kann mit Hilfe der Erfindung vorteilhaft durch das elektronische Gerät 10 selbst ausgeführt werden, indem die Software des Mikrokontrolers 1 den am dritten Widerstand R3 erfolgenden Spannungsabfall bei jeder Abfrage mit einem vorgegebenen Maximalwert vergleicht und bei Überschreiten des Maximalwertes den ersten Widerstand R1 über den Ausgang 3 so steuert, daß der Maximalwert wieder unterschritten wird.

In der Praxis ist in vielen Fällen von vornherein ein Vorwiderstand zwischen das elektronische Gerät 10 und einen der Pole 8, 9 der Spannuhgsquelle geschaltet, beispielsweise zum Zweck der Begrenzung des Stromes, welcher der Spannungsquelle entnommen wird. Dieser Vorwiderstand kann vorteilhaft dazu herangezogen werden, die Funktion des Widerstandes R7 von Fig. 5 oder Fig. 6 zu erfüllen.

Besonders vorteilhaft kann hierzu der Ausgang 3 den ersten Widerstand R1 so steuern, daß dieser größer ist als ein dritter Grenzwert G3, falls eine Abfrage ergibt, daß der Maximalwert überschritten ist, und der dritte Grenzwert G3 so gewählt sein, daß der Maximalwert nicht erreicht wird, wenn der erste Widerstand R1 größer ist als der dritte Grenzwert G3. Ferner kann der Ausgang 3 den ersten Widerstand R1 nach einer gewissen Zeit so steuern, daß dieser wieder kleiner ist als der dritte Grenzwert G3, um festzustellen, ob der Maximalwert erneut - da z.B. der Kurzschluß immer noch vorliegt - überschritten wird, oder nicht. Ein solches Verhalten wird als Kurzschluß-Takt-Verhalten bezeichnet. Die entsprechende Steuerung des ersten Widerstandes R1 kann besonders vorteilhaft durch die oben erläuterte Taktung des ersten Widerstandes erfolgen; umgekehrt kann eine evtl. bereits vorhandene Hardware zur Kurzschluß-Taktung sehr vorteilhaft auch zur Taktung des ersten Widerstandes zum Zwecke der Dateneingabe verwendet werden. Zur Auslösung der Kurzschluß-Taktung braucht lediglich der zweite Widerstand kurzgeschlossen zu werden.

Gemäß einer gegenüber der Schaltung von Fig. 5 modifizierten (nicht gezeigten) Variante der Erfindung entfällt daher der sechste Widerstand, wobei der Schalter S2 direkt mit dem Pluspol 8 der Spannungsquelle 8,9 verbunden ist. Ebenso entfällt gemäß einer gegenüber der Schaltung von Fig. 6 modifizierten (ebenfalls nicht gezeigten) Variante der Erfindung der sechste Widerstand, so daß der Schalter S2 von Fig. 6 direkt mit dem Minuspol 9 der Spannungsquelle 8,9 verbunden ist. Dies entspricht jeweils dem Sonderfall, daß der sechste Widerstand R6 von Fig. 5 bzw. Fig. 6 gleich bzw. näherungsweise gleich Null ist. Durch Schließen des Schalters S2 kann somit die oben erläuterte Kurschluß-Taktung ausgelöst werden. Bei diesen Varianten kann zur erfindungsgemäßen Taktung vorteilhaft das oben beschriebene Kurzschluß-Takt-Verhalten ausgenutzt werden, das z.B. einer Vielzahl von industriell eingesetzten Sensoren als von vornherein vorgesehene Kurzschluß-Sicherung serienmäßig zu eigen ist.

### Gewerbliche Anwendbarkeit:

Die Erfindung ist insbesondere zur seriellen Datenkommunikation zwischen einem Sensor, wie Näherungsschalter, und einer Datenverarbeitungseinrichtung, wie Programmiergerät oder Mikrokontroler, gewerblich anwendbar.

### Bezugszeichenliste:

- 1: Mikrokontroler
- 2: Eingang von 1
- 3: Ausgang von 1
- 4: Anschluß für Versorgungsspannung von 1
- 5: Bezugsansachluß von 1
- 6: Busverbindung zum Speicher
- 7: Busverbindung zum Meßaufnehmer
- 8,9: positiver, negativer Pol der Spannungsquelle
- 8a: Plusleitung
- 9a: Minusleitung
- 10: Sensor
- 11: Aufnehmer
- 12: Speicher
- 34: Spannungsversorgungsleitung
- 60: Steuerlogik
- 61: Ausgang von 60
- 62, 63: Eingänge von 60
- 70: Programmiergerät
- R1-R7: erster bis siebter Widerstand
- T1, T2: erster, zweiter Transistor
- S1, S2: erster, zweiter elektronischer Schalter
- Ust: Steuerspannung für R2

## Patentansprüche

1. Verfahren zur Dateneingabe in eine wenigstens ein elektronisches Gerät (10) steuernde elektronische Datenverarbeitungseinrichtung (1), welche einen Eingang (2), einen Ausgang (3) und einen Bezugsanschluß (5) aufweist und in welcher ein Datenverarbeitungsprogramm in einer Schleife abläuft, das zyklisch abfragt, ob eine Eingabebedingung erfüllt ist, welche entweder darin besteht, daß zwischen dem Eingang (2) und dem Bezugsanschluß (5) eine Eingangsspannung (Ue) anliegt, deren Betrag größer ist als ein bestimmter Schwellenwert (Uo), erste Alternative, oder darin besteht, daß zwischen dem Eingang (2) und dem Bezugsanschluß (5) eine Eingangsspannung (Ue) anliegt, deren Betrag kleiner ist als ein bestimmter Schwellenwert (Uo), zweite Alternative,
**dadurch gekennzeichnet, daß**
A) entweder im Fall der ersten Alternative
a) ein Pol (8) einer Spannungsquelle über eine Serienschaltung aus einem ersten, einem zweiten und einem dritten Widerstand (R1, R2, R3) an den anderen Pol (9) der Spannungsquelle gelegt ist, wobei die am dritten Widerstand (R3) abfallende Spannung zwischen dem Eingang (2) und dem Bezugsanschluß (5) angelegt ist und somit die Eingangsspannung (Ue) bildet,
b) der Schwellenwert (Uo) so gewählt ist, daß die Eingabebedingung dann und nur dann erfüllt ist, wenn der erste Widerstand (R1) kleiner ist als ein erster Grenzwert (G1) und der zweite Widerstand (R2) kleiner ist als ein zweiter Grenzwert (G2),
c) der zweite Widerstand (R2) so gesteuert wird, daß er für eine erste Zeitdauer (Z1) kleiner und danach für mindestens eine zweite Zeitdauer (Z2) größer ist als der zweite Grenzwert (G2),
d) der erste Widerstand (R1) durch den Ausgang (3) so gesteuert wird,
daß, wenn eine Abfrage ergibt, daß die Eingabebedingung erfüllt ist, eine Taktung des ersten Widerstandes (R1) ausgelöst wird, welche darin besteht, daß der erste Widerstand für eine dritte Zeitdauer (Z3) kleiner und danach für eine vierte Zeitdauer (Z4) größer ist als ein dritter Grenzwert (G3), und
daß der erste Widerstand (R1) vor und nach der Taktung ständig oder zumindest zeitweise für ein Zeitintervall, in welches mindestens eine Abfrage fällt, kleiner ist als der erste Grenzwert (G1),
e) und das Datenverarbeitungsprogramm nach Ende der ersten Zeitdauer (Z1) aus der Anzahl der Taktungen, welche während der ersten Zeitdauer (Z1) ausgelöst wurden, eine digitale Eingabeinformation bildet,
B) oder im Fall der zweiten Alternative
a) ein Pol (8) einer Spannungsquelle über eine Serienschaltung aus einem ersten, einem zweiten und einem dritten Widerstand (R1, R2, R3) an den anderen Pol (9) der Spannungsquelle gelegt ist, wobei die am dritten Widerstand (R3) abfallende Spannung zwischen dem Eingang (2) und dem Bezugsanschluß (5) angelegt ist und somit die Eingangsspannung (Ue) bildet,
b) der Schwellenwert (Uo) so gewählt ist, daß die Eingabebedingung dann und nur dann erfüllt ist, wenn der erste Widerstand (R1) größer ist als ein erster Grenzwert (G1) und der zweite Widerstand (R2) größer ist als ein zweiter Grenzwert (G2),
c) der zweite Widerstand (R2) so gesteuert wird, daß er für eine erste Zeitdauer (Z1) größer und danach für mindestens eine zweite Zeitdauer (Z2) kleiner ist als der zweite Grenzwert (G2),
d) der erste Widerstand (R1) durch den Ausgang (3) so gesteuert wird, daß, wenn eine Abfrage ergibt, daß die Eingabebedingung erfüllt ist, eine Taktung des ersten Widerstandes (R1) ausgelöst wird, welche darin besteht, daß der erste Widerstand für eine dritte Zeitdauer (Z3) kleiner und danach für eine vierte Zeitdauer (Z4) größer ist als ein dritter Grenzwert (G3), und daß der erste Widerstand (R1) vor und nach der Taktung ständig oder zumindest zeitweise für ein Zeitintervall, in welches mindestens eine Abfrage fällt, größer ist als der erste Grenzwert (G1),
e) und das Datenverarbeitungsprogramm nach Ende der ersten Zeitdauer (Z1) aus der Anzahl der Taktungen, welche während der ersten Zeitdauer (Z1) ausgelöst wurden, eine digitale Eingabeinformation bildet.

2. Verfahren nach Anspruch 1, **dadurch gekennzeichnet,**
**daß** die Taktung des ersten Widerstandes (R1) nicht darin besteht, daß der erste Widerstand für die dritte Zeitdauer (Z3) kleiner und danach für die vierte Zeitdauer (Z4) größer ist als der dritte Grenzwert (G3), sondern darin besteht, daß der erste Widerstand für die dritte Zeitdauer (Z3) größer und danach für die vierte Zeitdauer (Z4) kleiner ist als der dritte Grenzwert (G3).

3. Verfahren nach Anspruch 1 oder 2, **dadurch gekennzeichnet,**
**daß** der zweite Widerstand (R2) im Fall der ersten Alternativer während der ersten Zeitdauer (Z1) bzw. im Fall der zweiten Alternative während der zweiten Zeitdauer (Z2) näherungsweise Null Ohm, vorzugsweise weniger als 0,1 Ohm, beträgt.

4. Verfahren nach Anspruch 1, **dadurch gekennzeichnet,**
**daß** der erste und der dritte Grenzwert (G1, G3) identisch sind.

5. Verfahren nach Anspruch 1, **dadurch gekennzeichnet,**
**daß** der erste Widerstand (R1) zwischen dem zweiten und dem dritten Widerstand (R2, R3) geschaltet ist oder der dritte Widerstand (R3) zwischen dem ersten und dem zweiten Widerstand (R1, R2) geschaltet ist.

6. Verfahren nach Anspruch 5, **dadurch gekennzeichnet,**
**daß** die Summe der am ersten und am dritten Widerstand (R1, R3) abfallenden Spannungen der elektronischen Datenverarbeitungseinrichtung (1) als Versorgungsspannung zugeführt wird.

7. Verfahren nach einem der Ansprüche 1 bis 6, **dadurch gekennzeichnet,**
**daß** der erste Widerstand (R1) vor Beginn und nach Ende einer Taktung, nicht jedoch während einer solchen so gesteuert wird, daß er in regelmäßigen Zeitabständen vorübergehend im Fall der ersten Alternative kleiner bzw. im Fall der zweiten Alternative größer ist als der erste Grenzwert (G1).

8. Verfahren nach einem der Ansprüche 1 bis 7, **dadurch gekennzeichnet,**
**daß** das Ergebnis von Abfragen, die während der dritten oder vierten Zeitdauer (Z3, Z4) stattfinden, nicht zur Auslösung einer Taktung herangezogen wird.

9. Verfahren nach einem der Ansprüche 1 bis 8, **dadurch gekennzeichnet,**
**daß** die Taktung eine der vierten Zeitdauer (Z4) folgende fünfte Zeitdauer (Z5) umfaßt, in welcher der erste Widerstand (R1) so gesteuert wird, daß er im Fall der ersten Alternative kleiner bzw. im Fall der zweiten Alternative größer ist als der erste Grenzwert (G1) und in welche mindestens eine Abfrage fällt.

10. Verfahren nach Anspruch 9, **dadurch gekennzeichnet,**
**daß**, falls eine Mehrzahl von Abfragen in die fünfte Zeitdauer (Z5) fällt, nur die erste dieser Abfragen zur Auslösung einer Taktung herangezogen wird.

11. Verfahren nach Anspruch 9, **dadurch gekennzeichnet,**
**daß** nach der ersten Abfrage, welche in die fünfte Zeitdauer (Z5) fällt, die fünfte Zeitdauer (Z5) beendet wird, bevor die nächste Abfrage erfolgt, und eine neue Taktung ausgelöst wird.

12. Verfahren nach einem der Ansprüche 9 bis 11, **dadurch gekennzeichnet,**
**daß** die Summe der dritten, vierten und fünften Zeitdauer (Z3, Z4, Z5) und die zwischen zwei Abfragen verstreichende Zeit jeweils konstant und miteinander identisch sind.

13. Verfahren nach einem der Ansprüche 1 bis 12, **dadurch gekennzeichnet,**
**daß** das Ende der ersten Zeitdauer (Z1) daran erkannt wird, daß mindestens für eine bestimmte Zeitspanne keine weitere Taktung stattfindet.

14. Verfahren nach einem der Ansprüche 1 bis 13, **dadurch gekennzeichnet,**
**daß** das Ende der ersten Zeitdauer (Z1) daran erkannt wird, daß die Eingabebedingung für mindestens eine bestimmte Zeitspanne oder eine bestimmte Anzahl von Abfragen nicht erfüllt ist.

15. Verfahren nach einem der Ansprüche 1 bis 14, **dadurch gekennzeichnet,**
**daß** der zweite Widerstand (R2) durch eine Steuerlogik (60) gesteuert wird.

16. Verfahren nach Anspruch 15, **dadurch gekennzeichnet,**
**daß** während der Dateneingabe die Anzahl der Taktungen anhand der mit jeder Taktung verbundenen Schwankung des durch den ersten, zweiten und dritten Widerstand (R1, R2, R3) fließenden Stromes von der Steuerlogik (60) erfaßt und dort zur Bildung der digitalen Eingabeinformation herangezogen wird, so daß die digitale Eingabeinformation sowohl in der elektronischen Datenverarbeitungseinrichtung (1) als auch in der Steuerlogik (60) zur Verfügung steht.

17. Verfahren nach einem der Ansprüche 1 bis 16, **dadurch gekennzeichnet,**
**daß** die elektronische Datenverarbeitungseinrichtung (1) nur durch Senden eines vorher eindeutig definierten Codes in die Bereitschaft versetzt wird, weitere Daten zu empfangen.

18. Verfahren nach einem der Ansprüche 1 bis 16, **dadurch gekennzeichnet,**
**daß** die elektronische Datenverarbeitungseinrichtung (1) über den Ausgang (3) Daten ausgeben kann, indem der Ausgang (3) den ersten Widerstand (R1) so steuert, daß dieser mindestens eine Taktung ausführt, so daß der durch den ersten, zweiten und dritten Widerstand (R1, R2, R3) fließenden Strom im Rhythmus der Taktung oder Taktungen Schwankungen unterliegt, deren Anzahl erfaßt und zur Bildung einer digitalen Ausgabeinformation herangezogen wird.

19. Verfahren nach Anspruch 18, **dadurch gekennzeichnet,**
**daß** die Schwankungen erfaßt werden, indem die am zweiten Widerstand (R2) abfallende Spannung abgegriffen wird.

20. Vorrichtung zur Dateneingabe in eine wenigstens ein elektronisches Gerät (10) steuernde elektronischen Datenverarbeitungseinrichtung (1) mit einem Eingang (2), einem Ausgang (3) und einem Bezugsanschluß (5), in welcher ein Datenverarbeitungsprogramm in einer Schleife abläuft mit der zyklischen Abfrage, ob eine Eingabebedingung erfüllt ist, welche entweder darin besteht, daß zwischen dem Eingang (2) und dem Bezugsanschluß (5) eine Eingangsspannung (Ue) anliegt, deren Betrag größer ist als ein bestimmter Schwellenwert (Uo), erste Alternative, oder darin besteht, daß zwischen dem Eingang (2) und dem Bezugsanschluß (5) eine Eingangsspannung (Ue) anliegt, deren Betrag kleiner ist als ein bestimmter Schwellenwert (Uo), zweite Alternative,
**dadurch gekennzeichnet, daß**
A ) entweder im Fall der ersten Alternative
a) die Vorrichtung eine Serienschaltung aus einem ersten, einem zweiten und einem dritten Widerstand (R1, R2, R3) aufweist, wobei ein Pol (8) einer Spannungsquelle über die Serienschaltung an den anderen Pol (9) der Spannungsquelle gelegt ist und die am dritten Widerstand (R3) abfallende Spannung zwischen dem Eingang (2) und dem Bezugsanschluß (5) angelegt ist und somit die Eingangsspannung (Ue) bildet,
b) der bestimmte Schwellenwert (Uo) so gewählt ist, daß die Eingabebedingung dann und nur dann erfüllt ist, wenn der erste Widerstand (R1) kleiner ist als ein erster Grenzwert (G1) und der zweite Widerstand (R2) kleiner ist als ein zweiter Grenzwert (G2),
c) der zweite Widerstand (R2) so steuerbar ist, daß er für eine erste Zeitdauer (Z1) kleiner und danach für mindestens eine zweite Zeitdauer (Z2) größer ist als der zweite Grenzwert (G2),
d) der erste Widerstand (R1) durch den Ausgang (3) so gesteuert wird,
- daß, wenn eine Abfrage ergibt, daß die Eingabebedingung erfüllt ist, eine Taktung des ersten Widerstandes (R1) ausgelöst wird, welche darin besteht, daß der erste Widerstand für eine dritte Zeitdauer (Z3) kleiner und danach für eine vierte Zeitdauer (Z4) größer ist als ein dritter Grenzwert (G3), und
- daß der erste Widerstand (R1) vor und nach der Taktung ständig oder zumindest zeitweise für ein Zeitintervall, in welches mindestens eine Abfrage fällt, kleiner ist als der erste Grenzwert (G1),
e) und das Datenverarbeitungsprogramm nach Ende der ersten Zeitdauer (Z1) aus der Anzahl der Taktungen, welche während der ersten Zeitdauer (Z1) ausgelöst wurden, eine digitale Eingabeinformation bildet,
B) oder im Fall der zweiten Alternative
a) die Vorrichtung eine Serienschaltung aus einem ersten, einem zweiten und einem dritten Widerstand (R1, R2, R3) aufweist, wobei ein Pol (8) einer Spannungsquelle über die Serienschaltung an den anderen Pol (9) der Spannungsquelle gelegt ist und die am dritten Widerstand (R3) abfallende Spannung zwischen dem Eingang (2) und dem Bezugsanschluß (5) angelegt ist und somit die Eingangsspannung (Ue) bildet,
b) der Schwellenwert (Uo) so gewählt ist, daß die Eingabebedingung dann und nur dann erfüllt ist, wenn der erste Widerstand (R1) größer ist als ein erster Grenzwert (G1) und der zweite Widerstand (R2) größer ist als ein zweiter Grenzwert (G2),
c) der zweite Widerstand (R2) so steuerbar ist, daß er für eine erste Zeitdauer (Z1) größer und danach für mindestens eine zweite Zeitdauer (Z2) kleiner ist als der zweite Grenzwert (G2),
d) der erste Widerstand (R1) durch den Ausgang (3) so gesteuert wird,
- daß, wenn eine Abfrage ergibt, daß die Eingabebedingung erfüllt ist, eine Taktung des ersten Widerstandes (R1) ausgelöst wird, welche darin besteht, daß der erste Widerstand für eine dritte Zeitdauer (Z3) kleiner und danach für eine vierte Zeitdauer (Z4) größer ist als ein dritter Grenzwert (G3), und
- daß der erste Widerstand (R1) vor und nach der Taktung ständig oder zumindest zeitweise für ein Zeitintervall, in welches mindestens eine Abfrage fällt, größer ist als der erste Grenzwert (G1),
e) und das Datenverarbeitungsprogramm nach Ende der ersten Zeitdauer (Z1) aus der Anzahl der Taktungen, welche während der ersten Zeitdauer (Z1) ausgelöst wurden, eine digitale Eingabeinformation bildet.

21. Vorrichtung nach Anspruch 20, **dadurch gekennzeichnet,**
**daß** die Taktung des ersten Widerstandes (R1) nicht darin besteht, daß der erste Widerstand für die dritte Zeitdauer (Z3) kleiner und danach für die vierte Zeitdauer (Z4) größer ist als der dritte Grenzwert (G3), sondern darin besteht, daß der erste Widerstand für die dritte Zeitdauer (Z3) größer und danach für die vierte Zeitdauer (Z4) kleiner ist als der dritte Grenzwert (G3).

22. Vorrichtung nach Anspruch 20 oder 21, **dadurch gekennzeichnet,**
**daß** der zweite Widerstand (R2) im Fall der ersten Alternativer während der ersten Zeitdauer (Z1) bzw. im Fall der zweiten Alternative während der zweiten Zeitdauer (Z2) näherungsweise Null Ohm, vorzugsweise weniger als 0,1 Ohm, beträgt.

23. Vorrichtung nach Anspruch 20, **dadurch gekennzeichnet,**
**daß** der erste und der dritte Grenzwert (G1, G3) identisch sind.

24. Vorrichtung nach Anspruch 23, **dadurch gekennzeichnet,**
**daß** der erste Widerstand (R1) zwischen dem zweiten und dem dritten Widerstand (R2, R3) geschaltet ist oder der dritte Widerstand (R3) zwischen dem ersten und dem zweiten Widerstand (R1, R2) geschaltet ist.

25. Vorrichtung nach Anspruch 24, **dadurch gekennzeichnet,**
**daß** die Summe der am ersten und am dritten Widerstand (R1, R3) abfallenden Spannungen der elektronischen Datenverarbeitungseinrichtung (1) als Versorgungsspannung zugeführt ist.

26. Vorrichtung nach einem der Ansprüche 20 bis 25, **dadurch gekennzeichnet,**
**daß** die Taktung eine der vierten Zeitdauer (Z4) folgende fünfte Zeitdauer (Z5) umfaßt, in welcher der erste Widerstand (R1) so gesteuert wird, daß er im Fall der ersten Alternative kleiner bzw. im Fall der zweiten Alternative größer ist als der erste Grenzwert (G1) und in welche mindestens eine Abfrage fällt, wobei die Summe der dritten, vierten und fünften Zeitdauer (Z3, Z4, Z5) und die zwischen zwei Abfragen verstreichende Zeit jeweils konstant und miteinander identisch sind.

27. Vorrichtung nach einem der Ansprüche 20 bis 26, **dadurch gekennzeichnet,**
**daß** das Ende der ersten Zeitdauer (Z1) daran erkannt wird, daß mindestens für eine bestimmte Zeitspanne keine weitere Taktung stattfindet.

28. Vorrichtung nach einem der Ansprüche 20 bis 27, **dadurch gekennzeichnet,**
**daß** das Ende der ersten Zeitdauer (Z1) daran erkannt wird, daß die Eingabebedingung für mindestens eine bestimmte Zeitspanne oder eine bestimmte Anzahl von Abfragen nicht erfüllt ist.

29. Vorrichtung nach einem der Ansprüche 20 bis 28, **gekennzeichnet durch** eine Steuerlogik (60), welche den zweiten Widerstand (R2) steuert.

30. Vorrichtung nach Anspruch 29, **dadurch gekennzeichnet,**
**daß** die Steuerlogik (60) während der Dateneingabe die Anzahl der Taktungen anhand der mit jeder Taktung verbundenen Schwankung des durch den ersten, zweiten und dritten Widerstand (R1, R2, R3) fließenden Stromes erfaßt und zur Bildung der digitalen Eingabeinformation heranzieht, so daß die digitale Eingabeinformation sowohl in der elektronischen Datenverarbeitungseinrichtung (1) als auch in der Steuerlogik (60) zur Verfügung steht.

31. Vorrichtung nach einem der Ansprüche 20 bis 30, **dadurch gekennzeichnet,**
**daß** der erste Widerstand (R1) einen ersten elektronischen Schalter (S1) und einen zu diesem in Serie geschalteten vierten Widerstand (R4) sowie einen fünften Widerstand (R5) umfaßt, welcher zu der Serienschaltung aus dem ersten elektronischen Schalter (S1) und dem vierten Widerstand (R4) parallel geschaltet ist, wobei der vierte und der fünfte Widerstand (R4, R5) so gewählt sind, daß erste Widerstand (R1) größer bzw. kleiner ist als der erste Grenzwert (G1), wenn der erste elektronische Schalter (S1) geöffnet bzw. geschlossen ist, und der zweite Widerstand (R2) einen zweiten elektronischen Schalter (S2) und einen zu diesem in Serie geschalteten sechsten Widerstand (R6) sowie einen siebten Widerstand (R7) umfaßt, welcher zu der Serienschaltung aus dem zweiten elektronischen Schalter (S2) und dem sechsten Widerstand (R6) parallel geschaltet ist, wobei der sechste und der siebte Widerstand (R6, R7) so gewählt sind, daß zweite Widerstand (R2) größer bzw. kleiner ist als der zweite Grenzwert (G2), wenn der zweite elektronische Schalter (S2) geöffnet bzw. geschlossen ist.

32. Vorrichtung nach einem der Ansprüche 20 bis 30, **dadurch gekennzeichnet,**
**daß** der erste Widerstand (R1) einen ersten Schalter und einen zu diesem in Serie geschalteten vierten Widerstand (R4) sowie einen fünften Widerstand (R5) umfaßt, welcher zu der Serienschaltung aus dem ersten Schalter und dem vierten Widerstand (R4) parallel geschaltet ist, wobei der vierte und der fünfte Widerstand (R4, R5) so gewählt sind, daß erste Widerstand (R1) größer bzw. kleiner ist als der erste Grenzwert (G1), wenn der erste elektronische Schalter geöffnet bzw. geschlossen ist, und der zweite Widerstand (R2) einen zweiten Schalter sowie einen siebten Widerstand (R7) umfaßt, welcher zu dem zweiten Schalter parallel geschaltet ist, wobei der zweite Schalter entweder zwischen den einen Pol (8) der Spannungsquelle und den ersten Widerstand (R1) oder zwischen den zweiten Pol (9) der Spannungsquelle und den dritten Widerstand (R3) geschaltet ist und der siebte Widerstand (R7) so gewählt ist, daß zweite Widerstand (R2) größer bzw. kleiner ist als der zweite Grenzwert (G2), wenn der zweite Schalter geöffnet bzw. geschlossen ist.

33. Vorrichtung nach einem der Ansprüche 20 bis 32, **dadurch gekennzeichnet,**
**daß** die elektronische Datenverarbeitungseinrichtung (1) über den Ausgang (3) Daten ausgeben kann, indem der Ausgang (3) den ersten Widerstand (R1) so steuert, daß dieser mindestens eine Taktung ausführt, so daß der durch den ersten, zweiten und dritten Widerstand (R1, R2, R3) fließenden Strom im Rhythmus der Taktung oder Taktungen Schwankungen unterliegt, deren Anzahl erfaßt und zur Bildung einer digitalen Ausgabeinformation herangezogen werden.

34. Vorrichtung nach einem der Ansprüche 29 oder 30, **dadurch gekennzeichnet,**
**daß** die Steuerlogik (60) Bestandteil eines Programmiergerätes (70) ist.

35. Vorrichtung nach einem der Ansprüche 20 bis 34, **dadurch gekennzeichnet,**
**daß** die Spannungsversorgung der elektronischen Datenverarbeitungseinrichtung (1) über einen Pegelwandler (100) erfolgt.

## Claims

1. A method for inputting data into an electronic data processing device (1) that controls at least one electronic unit (10) and that comprises an input (2), an output (3) and a reference connector (5) and in which a data processing program runs in a loop and cyclically queries whether an input condition has been fulfilled which is either - first alternative - that an input voltage (Ue), whose value is greater than a predetermined threshold value (Uo), is present between the input (2) and the reference connector (5) or - second alternative - that an input voltage (Ue), whose value is smaller than a predetermined threshold value (Uo), is present between the input (2) and the reference connector (5),
**characterized in that**
A) either in case of the first alternative,
a) one pole (8) of a voltage source is applied to the other pole (9) of the voltage source via a series connection consisting of a first, a second and a third resistor (R1, R2, R3), whereby the voltage that is dropping at the third resistor (R3) is applied between the input (2) and the reference connector (5), thus forming the input voltage (Ue),
b) the threshold value (Uo) is selected in such a way that the input condition is fulfilled if and only if the first resistor (R1) is smaller than a first limit value (G1) and the second resistor (R2) is smaller than a second limit value (G2),
c) the second resistor (R2) is controlled in such a way that it is smaller than the second limit value (G2) for a first period of time (Z1) and subsequently greater than the second limit value (G2) for at least a second period of time (Z2),
d) the first resistor (R1) is controlled by the output (3) in such a way that,
. if a query indicates that the input condition has been fulfilled, a synchronization of the first resistor (R1) is triggered which consists of the fact that the first resistor is smaller than a third limit value (G3) for a third period of time (Z3) and subsequently greater than a third limit value (G3) for a fourth period of time (Z4), and
. before and after the synchronization, the first resistor (R1) is smaller than the first limit value (G1) constantly or at least temporarily for a period of time during which at least one query is made,
e) and, after the end of the first period of time (Z1), the data processing program forms digital input information on the basis of the number of synchronizations that were triggered during the first period of time (Z1),
B) or in case of the second alternative,
a) one pole (8) of a voltage source is applied to the other pole (9) of the voltage source via a series connection consisting of a first, a second and a third resistor (R1, R2, R3), whereby the voltage that is dropping at the third resistor (R3) is applied between the input (2) and the reference connector (5), thus forming the input voltage (Ue),
b) the threshold value (Uo) is selected in such a way that the input condition is fulfilled if and only if the first resistor (R1) is greater than a first limit value (G1) and the second resistor (R2) is greater than a second limit value (G2),
c) the second resistor (R2) is controlled in such a way that it is greater than the second limit value (G2) for a first period of time (Z1) and subsequently smaller than the second limit value (G2) for at least a second period of time (Z2),
d) the first resistor (R1) is controlled by the output (3) in such a way that,
. if a query indicates that the input condition has been fulfilled, a synchronization of the first resistor (R1) is triggered which consists of the fact that the first resistor is smaller than a third limit value (G3) for a third period of time (Z3) and subsequently greater than a third limit value (G3) for a fourth period of time (Z4),
. before and after the synchronization, the first resistor (R1) is greater than the first limit value (G1) constantly or at least temporarily for a period of time during which at least one query is made,
e) and, after the end of the first period of time (Z1), the data processing program forms digital input information on the basis of the number of synchronizations that were triggered during the first period of time (Z1).

2. The method according to Claim 1, **characterized in that**
the synchronization of the first resistor (R1) does not consist of the fact that the first resistor is smaller than the third limit value (G3) during the third period of time (Z3) and subsequently greater than the third limit value (G3) during the fourth period of time (Z4), but rather, it consists of the fact that the first resistor is greater than the third limit value (G3) during the third period of time (Z3) and subsequently smaller than the third limit value (G3) during the fourth period of time (Z4).

3. The method according to Claim 1 or 2, **characterized in that**
the second resistor (R2) has a value of approximately zero ohm, preferably less than 0.1 ohm, during the first period of time (Z1) in case of the first alternative, or during the second period of time (Z2) in case of the second alternative.

4. The method according to Claim 1, **characterized in that**
the first and the third limit values (G1, G3) are identical.

5. The method according to Claim 1, **characterized in that**
the first resistor (R1) is connected between the second and the third resistors (R2, R3), or the third resistor (R3) is connected between the first and the second resistors (R1, R2).

6. The method according to Claim 5, **characterized in that**
the sum of the voltages that are dropping at the first and the third resistors (R1, R3) is fed as supply voltage to the electronic data processing device (1).

7. The method according to one of Claims 1 through 6,
**characterized in that**, prior to the beginning and after the end of a synchronization, but not during such a synchronization, the first resistor (R1) is controlled in such a way that, at regular time intervals, it is temporarily smaller than the first limit value (G1) in case of the first alternative or greater than the first limit value (G1) in case of the second alternative.

8. The method according to one of Claims 1 through 7, **characterized in that** the result of queries that take place during the third or fourth periods of time (Z3, Z4) is not employed to trigger a synchronization.

9. The method according to one of Claims 1 through 8, **characterized in that** the synchronization encompasses a fifth period of time (Z5) that follows the fourth period of time (Z4) and, during this fifth period of time (Z5), the first resistor (R1) is controlled in such a way that it is smaller than the first limit value (G1) in case of the first alternative, or greater than the first limit value (G1) in case of the second alternative, and at least one query is made during this fifth period of time (Z5).

10. The method according to Claim 9, **characterized in that**,
if multiple queries are made during the fifth period of time (Z5), only the first of these queries is employed to trigger a synchronization.

11. The method according to Claim 9, **characterized in that**,
after the first query, which is made during the fifth period of time (Z5), the latter is ended before the next query is made, and a new synchronization is triggered.

12. The method according to one of Claims 9 through 11, **characterized in that**
the sum of the third, fourth and fifth periods of time (Z3, Z4, Z5) and the time that elapses between two queries are constant and identical to each other.

13. The method according to one of Claims 1 through 12,
**characterized in that** the end of the first period of time (Z1) is recognized on the basis of the fact that no further synchronization is carried out, at least during a certain period of time.

14. The method according to one of Claims 1 through 13,
**characterized in that** the end of the first period of time (Z1) is recognized on the basis of the fact that the input condition is not fulfilled for at least a certain period of time or for a certain number of queries.

15. The method according to one of Claims 1 through 14, **characterized in that**
the second resistor (R2) is controlled by means of a control logic (60).

16. The method according to Claim 15, **characterized in that**,
during the data inputting, the control logic (60) detects the number of synchronizations on the basis of the fluctuation in the current that flows through the first, second and third resistors (R1, R2, R3), said fluctuation being associated with each synchronization, and the control logic (60) uses the number of synchronizations to form the digital input information so that the digital input information is available in the electronic data processing device (1) as well as in the control logic (60).

17. The method according to one of Claims 1 through 16, **characterized in that**
the electronic data processing device (1) is made ready to receive additional data only through the transmission of a code that has been previously and unambiguously defined.

18. The method according to one of Claims 1 through 16, **characterized in that**
the electronic data processing device (1) can output data via the output (3) **in that** the latter controls the first resistor (R1) in such a way that it executes at least one synchronization, so that the current flowing through the first, second and third resistors (R1, R2, R3) undergoes fluctuations in the rhythm of the synchronization or synchronizations, whose number is detected and employed to form digital output information.

19. The method according to Claim 18, **characterized in that**
the fluctuations are detected by tapping the voltage that is dropping at the second resistor (R2).

20. A device for inputting data into an electronic data processing device (1) that controls at least one electronic unit (10) and that comprises an input (2), an output (3) and a reference connector (5) and in which a data processing program runs in a loop and cyclically queries whether an input condition has been fulfilled which is either - first alternative - that an input voltage (Ue), whose value is greater than a predetermined threshold value (Uo), is present between the input (2) and the reference connector (5) or - second alternative - that an input voltage (Ue), whose value is smaller than a predetermined threshold value (Uo), is present between the input (2) and the reference connector (5),
**characterized in that**
A) either in case of the first alternative,
a) the device has a series connection consisting of a first, a second and a third resistor (R1, R2, R3), whereby one pole (8) of a voltage source is applied via the series connection to the other pole (9) of the voltage source and the voltage that is dropping at the third resistor (R3) is applied between the input (2) and the reference connector (5), thus forming the input voltage (Ue),
b) the predetermined threshold value (Uo) is selected in such a way that the input condition is fulfilled if and only if the first resistor (R1) is smaller than a first limit value (G1) and the second resistor (R2) is smaller than a second limit value (G2),
c) the second resistor (R2) can be controlled in such a way that it is smaller than the second limit value (G2) for a first period of time (Z1) and subsequently greater than the second limit value (G2) for at least a second period of time (Z2),
d) the first resistor (R1) is controlled by the output (3) in such a way that,
. if a query indicates that the input condition has been fulfilled, a synchronization of the first resistor (R1) is triggered which consists of the fact that the first resistor is smaller than a third limit value (G3) for a third period of time (Z3) and subsequently greater than a third limit value (G3) for a fourth period of time (Z4), and
. before and after the synchronization, the first resistor (R1) is smaller than the first limit value (G1) constantly or at least temporarily for a period of time during which at least one query is made,
e) and, after the end of the first period of time (Z1), the data processing program forms digital input information on the basis of the number of synchronizations that were triggered during the first period of time (Z1),
B) or in case of the second alternative,
a) the device has a series connection consisting of a first, a second and a third resistor (R1, R2, R3), whereby one pole (8) of a voltage source is applied to the other pole (9) of the voltage source via the series connection and the voltage that is dropping at the third resistor (R3) is applied between the input (2) and the reference connector (5), thus forming the input voltage (Ue),
b) the threshold value (Uo) is selected in such a way that the input condition is fulfilled if and only if the first resistor (R1) is greater than a first limit value (G1) and the second resistor (R2) is greater than a second limit value (G2),
c) the second resistor (R2) can be controlled in such a way that it is greater than the second limit value (G2) for a first period of time (Z1) and subsequently smaller than the second limit value (G2) for at least a second period of time (Z2),
d) the first resistor (R1 ) is controlled by the output (3) in such a way that,
. if a query indicates that the input condition has been fulfilled, a synchronization of the first resistor (R1) is triggered which consists of the fact that the first resistor is smaller than a third limit value (G3) for a third period of time (Z3) and subsequently greater than a third limit value (G3) for a fourth period of time (Z4),
. before and after the synchronization, the first resistor (R1) is greater than the first limit value (G1) constantly or at least temporarily for a period of time during which at least one query is made,
e) and, after the end of the first period of time (Z1), the data processing program forms digital input information on the basis of the number of synchronizations that were triggered during the first period of time (Z1).

21. The device according to Claim 20, **characterized in that**
the synchronization of the first resistor (R1) does not consist of the fact that the first resistor is smaller than the third limit value (G3) during the third period of time (Z3) and subsequently greater than the third limit value (G3) during the fourth period of time (Z4), but rather, it consists of the fact that the first resistor is greater than the third limit value (G3) during the third period of time (Z3) and subsequently smaller than the third limit value (G3) during the fourth period of time (Z4).

22. The device according to Claim 20 or 21, **characterized in that**
the second resistor (R2) has a value of approximately zero ohm, preferably less than 0.1 ohm, during the first period of time (Z1) in case of the first alternative or during the second period of time (Z2) in case of the second alternative.

23. The device according to Claim 20, **characterized in that**
the first and the third limit values (G1, G3) are identical.

24. The device according to Claim 23, **characterized in that**
the first resistor (R1) is connected between the second and the third resistors (R2, R3), or the third resistor (R3) is connected between the first and the second resistors (R1, R2).

25. The device according to Claim 24, **characterized in that**
the sum of the voltages that are dropping at the first and the third resistors (R1, R3) is fed as supply voltage to the electronic data processing device (1).

26. The device according to one of Claims 20 through 25, **characterized in that**
the synchronization encompasses a fifth period of time (Z5) that follows the fourth period of time (Z4) and during this fifth period of time (Z5), the first resistor (R1) is controlled in such a way that it is smaller than the first limit value (G1) in case of the first alternative, or greater than the first limit value (G1) in case of the second alternative, and at least one query is made during this fifth period of time (Z5), whereby the sum of the third, fourth and fifth periods of time (Z3, Z4, Z5) and the time that elapses between two queries are constant and identical to each other.

27. The device according to one of Claims 20 through 26, **characterized in that**
the end of the first period of time (Z1) is recognized on the basis of the fact that no further synchronization is carried out, at least during a certain period of time.

28. The device according to one of Claims 20 through 27, **characterized in that**
the end of the first period of time (Z1) is recognized on the basis of the fact that the input condition is not fulfilled for at least a certain period of time or for a certain number of queries.

29. The device according to one of Claims 20 through 28, **characterized by** a control logic (60) that controls the second resistor (R2).

30. The device according to Claim 29, **characterized in that** during the data inputting, the control logic (60) detects the number of synchronizations on the basis of the fluctuation in the current that flows through the first, second and third resistors (R1, R2, R3), said fluctuation being associated with each synchronization, and the control logic (60) uses the number of synchronizations to form the digital input information so that the digital input information is available in the electronic data processing device (1) as well as in the control logic (60).

31. The device according to one of Claims 20 through 30, **characterized in that**
the first resistor (R1) comprises a first electronic switch (S1) and a fourth resistor (R4) connected in series thereto, as well as a fifth resistor (R5) that is connected in parallel to the series connection consisting of the first electronic switch (S1) and the fourth resistor (R4), whereby the fourth and fifth resistors (R4, R5) are selected in such a way that the first resistor (R1) is greater or smaller than the first limit value (G1) when the first electronic switch (S1) is open or closed, respectively, and the second resistor (R2) comprises a second electronic switch (S2) and a sixth resistor (R6) connected in series thereto as well as a seventh resistor (R7) that is connected in parallel to the series connection consisting of the second electronic switch (S2) and the sixth resistor (R6), whereby the sixth and seventh resistors (R6, R7) are selected in such a way that the second resistor (R2) is greater or smaller than the second limit value (G2) when the second electronic switch (S2) is open or closed, respectively.

32. The device according to one of Claims 20 through 30, **characterized in that**
the first resistor (R1) comprises a first switch and a fourth resistor (R4) connected in series thereto, as well as a fifth resistor (R5) that is connected in parallel to the series connection consisting of the first switch and the fourth resistor (R4), whereby the fourth and fifth resistors (R4, R5) are selected in such a way that the first resistor (R1) is greater or smaller than the first limit value (G1) when the first electronic switch is open or closed, respectively, and the second resistor (R2) comprises a second switch as well as a seventh resistor (R7) that is connected in parallel to the second switch, whereby the second switch is connected either between the one pole (8) of the voltage source and the first resistor (R1) or between the second pole (9) of the voltage source and the third resistor (R3) and the seventh resistor (R7) is selected in such a way that the second resistor (R2) is greater or smaller than the second limit value (G2) when the second electronic switch is open or closed, respectively.

33. The device according to one of Claims 20 to 32, **characterized in that** the electronic data processing device (1) can output data via the output (3) **in that** the latter controls the first resistor (R1) in such a way that it executes at least one synchronization, so that the current flowing through the first, second and third resistors (R1, R2, R3) undergoes fluctuations in the rhythm of the synchronization or synchronizations, whose number is detected and employed to form digital output information.

34. The device according to one of Claims 29 or 30, **characterized in that** the control logic (60) is an integral part of a programming device (70).

35. The device according to one of Claims 20 to 34, **characterized in that** the electronic data processing device (1) is supplied with voltage by means of a level transducer (100).

## Revendications

1. Procédé destiné à l'entrée des données dans un système de traitement de données électronique (1) commandant au moins un appareil électronique (10), lequel système de traitement de données électronique possède une entrée (2), une sortie (3) et une connexion de référence (5) et dans lequel un programme de traitement des données se déroule dans une boucle, lequel programme interroge de façon cyclique si une condition d'entrée est remplie, laquelle consiste, ou bien en ce que, entre l'entrée (2) et la connexion de référence (5), une tension d'entrée (Ue) est appliquée dont la valeur est plus grande qu'une valeur de seuil (Uo) définie, première alternative, ou bien en ce que, entre l'entrée (2) et la connexion de référence (5), une tension d'entrée (Ue) est appliquée, dont la valeur est plus petite qu'une valeur de seuil (Uo) définie, deuxième alternative,
**caractérisé en ce que**
A) ou bien dans le cas de la première alternative
a) un pôle (8) d'une source de tension est appliqué à l'autre pôle (9) de la source de tension via un montage en série composé d'une première, d'une deuxième et d'une troisième résistance (R1, R2, R3), la tension en chute à la troisième résistance (R3) étant appliquée entre l'entrée (2) et la connexion de référence (5) et constitue ainsi la tension d'entrée (Ue),
b) la valeur de seuil (Uo) est choisie de sorte que la condition d'entrée n'est seulement remplie que lorsque la première résistance (R1) est plus petite qu'une première valeur limite (G1) et la deuxième résistance (R2) est plus petite qu'une deuxième valeur limite (G2),
c) la deuxième résistance (R2) est commandée de manière à ce qu'elle est plus petite pour une première période (Z1) et ensuite, pour au moins une deuxième période (Z2), plus grande que la deuxième valeur limite (G2),
d) la première résistance (R1) est commandée par la sortie (3) de façon à ce que
- lorsqu'une interrogation donne pour résultat que la condition d'entrée est remplie, une cadence de la première résistance (R1) est déclenchée qui consiste **en ce que** la première résistance est plus petite pour une troisième période (Z3) et ensuite pour une quatrième période (Z4) est plus grande qu'une troisième valeur limite (G3), et
- la première résistance (R1) avant et après la cadence, est plus petite que la première valeur limite (G1), tout le temps ou tout du moins par intermittence dans un intervalle de temps dans lequel tombe au moins une interrogation,
e) et le programme de traitement des données, à la fin de la première période (Z1), constitue une information d'entrée digitale à partir du nombre des cadences qui ont été déclenchées pendant la première période (Z1),
B ou dans le cas de la deuxième alternative
a) un pôle (8) d'une source de tension est appliqué à l'autre pôle (9) de la source de tension via un montage en série composé d'une première, d'une deuxième et d'une troisième résistance (R1, R2, R3), la tension en chute à la troisième résistance (R3) étant appliquée entre l'entrée (2) et la connexion de référence (5) et constitue ainsi la tension d'entrée (Ue),
b) la valeur de seuil (Uo) est choisie de sorte que la condition d'entrée n'est seulement remplie que lorsque la première résistance (R1) est plus grande qu'une première valeur limite (G1) et la deuxième résistance (R2) est plus grande qu'une deuxième valeur limite (G2),
c) la deuxième résistance (R2) est commandée de manière à ce qu'elle est plus grande pour une première période (Z1) et ensuite, pour au moins une deuxième période (Z2), plus petite que la deuxième valeur limite (G2),
d) la première résistance (R1) est commandée par la sortie (3) de façon à ce que
- lorsqu'une interrogation donne pour résultat que la condition d'entrée est remplie, une cadence de la première résistance (R1) est déclenchée qui consiste **en ce que** la première résistance est plus petite pour une troisième période (Z3) et ensuite pour une quatrième période (Z4) est plus grande qu'une troisième valeur limite (G3), et
- que la première résistance (R1) avant et après la cadence, est plus grande que la première valeur limite (G1), tout le temps ou tout du moins par intermittence pour un intervalle de temps dans lequel tombe au moins une interrogation,
e) et le programme de traitement des données, à la fin de la première période (Z1), constitue une information d'entrée digitale à partir du nombre des cadences qui ont été déclenchées pendant la première période (Z1).

2. Procédé selon la revendication 1, **caractérisé en ce que**
la cadence de la première résistance (R1) ne consiste pas **en ce que** la première résistance est plus petite pour la troisième période (Z3) et après pour la quatrième période (Z4) plus grande que la troisième valeur limite (G3), mais consiste **en ce que** la première résistance est plus grande pour la troisième période (Z3) et après pour la quatrième période plus petite que la troisième valeur limite (G3).

3. Procédé selon la revendication 1 ou 2, **caractérisé en ce que**
la deuxième résistance (R2) dans le cas de la première alternative, pendant la première période (Z1), ou, dans le cas de la deuxième alternative, pendant la deuxième période (Z2), s'élève approximativement à zéro Ohm, de préférence à moins de 0,1 Ohm.

4. Procédé selon la revendication 1, **caractérisé en ce que**
la première et la troisième valeur limite (G1, G3) sont identiques.

5. Procédé selon la revendication 1, **caractérisé en ce que**
la première résistance (R1) est connectée entre la deuxième et la troisième résistance (R2, R3) ou la troisième résistance (R3) est connectée entre la première et la deuxième résistance (R1, R2).

6. Procédé selon la revendication 1, **caractérisé en ce que**
la somme des tensions en chute à la première et à la troisième résistance (R1, R3) du système de traitement de données électronique (1) est admise en tant que tension d'alimentation.

7. Procédé selon l'une des revendications 1 à 6, **caractérisé en ce que**
la première résistance (R1) avant le début et à la fin d'une cadence, cependant pas pendant une telle cadence, est commandée de sorte qu'elle est, à des intervalles de temps réguliers, provisoirement plus petite dans le cas de la première alternative ou, dans le cas de la deuxième alternative, plus grande que la première valeur limite (G1).

8. Procédé selon l'une des revendications 1 à 7, **caractérisé en ce que**
le résultat d'interrogations qui ont lieu pendant la troisième ou la quatrième période (Z3, Z4) ne sert pas au déclenchement d'une cadence.

9. Procédé selon l'une des revendications 1 à 8, **caractérisé en ce que**
la cadence comprend une cinquième période (Z5) qui succède à la quatrième période (Z4), cinquième période dans laquelle la première résistance (R1) est commandée de sorte qu'elle est plus petite dans le cas de la première alternative ou dans le cas de la deuxième alternative plus grande que la première valeur limite (G1), et dans laquelle tombe au moins une interrogation.

10. Procédé selon la revendication 9, **caractérisé en ce que**
au cas où une pluralité d'interrogations tombe dans la cinquième période (Z5), seulement la première de ces interrogations sert au déclenchement d'une cadence.

11. Procédé selon la revendication 9, **caractérisé en ce que**
après la première interrogation, laquelle tombe dans la cinquième période (Z5), la cinquième période (Z5) s'achève avant que l'interrogation suivante ne se produise et déclenche une nouvelle cadence.

12. Procédé selon l'une des revendications 9 à 11, **caractérisé en ce que**
la somme des troisième, quatrième et cinquième période (Z3, Z4, Z5) et le temps écoulé entre deux interrogations sont respectivement constants et identiques l'un l'autre.

13. Procédé selon l'une des revendications 1 à 12, **caractérisé en ce que**
on reconnaît la fin de la première période (Z1) à ce que, au moins pour un certain laps de temps, il ne se produit pas d'autre cadence.

14. Procédé selon l'une des revendications 1 à 13, **caractérisé en ce que**
on reconnaît la fin de la première période (Z1) à ce que, la condition d'entrée n'est pas remplie pour au moins un certain laps de temps ou un certain nombre d'interrogations.

15. Procédé selon l'une des revendications 1 à 14, **caractérisé en ce que**
la deuxième résistance (R2) est commandée par une logique de commande (60).

16. Procédé selon la revendication 15, **caractérisé en ce que**
pendant l'entrée des données, le nombre de cadences est enregistré par la logique de commande (60) moyennant la fluctuation, liée avec chaque cadence, du courant qui passe à travers la première, la deuxième et la troisième résistance (R1, R2, R3), et sert à la formation, dans la logique de commande, de l'information d'entrée digitale, de sorte que l'information d'entrée digitale est disponible aussi bien dans le système de traitement de données électroniques (1) que dans la logique de commande (60).

17. Procédé selon l'une des revendications 1 à 16, **caractérisé en ce que**
le système de traitement de données électronique (1), est mis uniquement par l'envoi d'un code défini au préalable de façon univoque en mode d'attente pour recevoir d'autre données.

18. Procédé selon l'une des revendications 1 à 16, **caractérisé en ce que**
le système de traitement de données électroniques (1) peut émettre des données via la sortie (3), dans la mesure où la sortie (3) commande la première résistance (R1) de façon à ce que celle-ci exécute au moins une cadence, de manière à ce que le courant qui passe à travers la première, la deuxième et la troisième résistance (R1, R2, R3) est soumis à des fluctuations au rythme de la cadence ou des cadences, fluctuations dont le nombre est enregistré et qui servent à la formation d'une information de sortie digitale.

19. Procédé selon la revendication 18, **caractérisé en ce que**
les fluctuations sont enregistrées, dans la mesure où l'on prélève la tension en chute sur la deuxième résistance (R2).

20. Dispositif destiné à l'entrée des données dans un système de traitement de données électronique (1) conmandant au moins un appareil électronique (10), comportant une entrée (2), une sortie (3) et une connexion de référence (5), dans lequel un programme de traitement des données se déroule dans une boucle, avec l'interrogation cyclique si une condition d'entrée est remplie, laquelle consiste, ou bien en ce que, entre l'entrée (2) et la connexion de référence (5), une tension d'entrée (Ue) est appliquée dont la valeur est plus grande qu'une valeur de seuil (Uo) définie, première alternative, ou bien en ce que, entre l'entrée (2) et la connexion de référence (5), une tension d'entrée (Ue) est appliquée, dont la valeur est plus petite qu'une valeur de seuil (Uo) définie, deuxième alternative,
**caractérisé en ce que**
A) ou bien dans le cas de la première alternative
a) le dispositif présente un montage en série composé d'une première, d'une deuxième et d'une troisième résistance (R1, R2, R3), un pôle (8) d'une source de tension étant appliqué via le montage en série à l'autre pôle (9) de la source de tension et la tension en chute à la troisième résistance (R3) étant appliquée entre l'entrée (2) et la connexion de référence (5) et constitue ainsi la tension d'entrée (Ue),
b) la valeur de seuil (Uo) définie est choisie de sorte que la condition d'entrée n'est seulement remplie que lorsque la première résistance (R1) est plus petite qu'une première valeur limite (G1) et la deuxième résistance (R2) est plus petite qu'une deuxième valeur limite (G2),
c) la deuxième résistance (R2) est commandée de manière à ce qu'elle est plus petite pour une première période (Z1) et ensuite, pour au moins une deuxième période (Z2), plus grande que la deuxième valeur limite (G2),
d) la première résistance (R1) est commandée par la sortie (3) de façon à ce que
- lorsqu'une interrogation donne pour résultat que la condition d'entrée est remplie, une cadence de la première résistance (R1) est déclenchée qui consiste **en ce que** la première résistance est plus petite pour une troisième période (Z3) et ensuite pour une quatrième période (Z4) est plus grande qu'une troisième valeur limite (G3), et
- la première résistance (R1) avant et après la cadence, est plus petite que la première valeur limite (G1), tout le temps ou tout du moins par intermittence dans un intervalle de temps dans lequel tombe au moins une interrogation,
e) et le programme de traitement des données, à la fin de la première période (Z1), constitue une information d'entrée digitale à partir du nombre des cadences qui ont été déclenchées pendant la première période (Z1),
B) ou dans le cas de la deuxième alternative
a) le dispositif présente un montage en série composé d'une première, d'une deuxième et d'une troisième résistance (R1, R2, R3), un pôle (8) d'une source de tension étant appliqué via le montage en série à l'autre pôle (9) de la source de tension et la tension en chute à la troisième résistance (R3) étant appliquée entre l'entrée (2) et la connexion de référence (5) et constitue ainsi la tension d'entrée (Ue),
b) la valeur de seuil (Uo) est choisie de sorte que la condition d'entrée n'est seulement remplie que lorsque la première résistance (R1) est plus grande qu'une première valeur limite (G1) et la deuxième résistance (R2) est plus grande qu'une deuxième valeur limite (G2),
c) la deuxième résistance (R2) peut être commandée de manière à ce qu'elle est plus grande pour une première période (Z1) et ensuite, pour au moins une deuxième période (Z2), plus petite que la deuxième valeur limite (G2),
d) la première résistance (R1) est commandée par la sortie (3) de façon à ce que
- lorsqu'une interrogation donne pour résultat que la condition d'entrée est remplie, une cadence de la première résistance (R1) est déclenchée qui consiste **en ce que** la première résistance est plus petite pour une troisième période (Z3) et ensuite pour une quatrième période (Z4) est plus grande qu'une troisième valeur limite (G3), et
- que la première résistance (R1) avant et après la cadence, est plus grande que la première valeur limite (G1), tout le temps ou tout du moins par intermittence dans un intervalle de temps dans lequel tombe au moins une interrogation,
e) et le programme de traitement des données, à la fin de la première période (Z1), constitue une information d'entrée digitale à partir du nombre des cadences qui ont été déclenchées pendant la première période (Z1).

21. Dispositif selon la revendication 20, **caractérisé en ce que**
la cadence de la première résistance (R1) ne consiste pas **en ce que** la première résistance est plus petite pour la troisième période (Z3) et après pour la quatrième période (Z4) plus grande que la troisième valeur limite (G3), mais consiste **en ce que** la première résistance est plus grande pour la troisième période (Z3) et après pour la quatrième période plus petite que la troisième valeur limite (G3).

22. Dispositif selon la revendication 20 ou 21, **caractérisé en ce que**
la deuxième résistance (R2) dans le cas de la première alternative, pendant la première période (Z1), ou, dans le cas de la deuxième alternative, pendant la deuxième période (Z2), s'élève approximativement à zéro Ohm, de préférence à moins de 0,1 Ohm.

23. Dispositif selon la revendication 20, **caractérisé en ce que**
la première et la troisième valeur limite (G1, G3) sont identiques.

24. Dispositif selon la revendication 23, **caractérisé en ce que**
la première résistance (R1) est connectée entre la deuxième et la troisième résistance (R2, R3) ou la troisième résistance (R3) est connectée entre la première et la deuxième résistance (R1, R2).

25. Dispositif selon la revendication 24, **caractérisé en ce que**
la somme des tensions en chute à la première et la à la troisième résistance (R1, R3) du système de traitement de données électronique (1) est admise en tant que tension d'alimentation.

26. Dispositif selon l'une des revendications 20 à 25, **caractérisé en ce que**
la cadence comprend une cinquième période (Z5) qui succède à la quatrième période (Z4), cinquième période dans laquelle la première résistance (R1) est commandée de façon à ce qu'elle est plus petite dans le cas de la première alternative ou dans le cas de la deuxième alternative plus grande que la première valeur limite (G1), et dans laquelle tombe au moins une interrogation, la somme des troisième, quatrième et cinquième période (Z3, Z4, Z5) et le temps écoulé entre deux interrogations étant respectivement constants et identiques l'un l'autre.

27. Dispositif selon l'une des revendications 20 à 26, **caractérisé en ce que**
on reconnaît la fin de la première période (Z1) à ce que, au moins pour un certain laps de temps, il ne se produit pas d'autre cadence.

28. Dispositif selon l'une des revendications 20 à 27, **caractérisé en ce que** on reconnaît la fin de la première période (Z1) à ce que la condition d'entrée n'est pas remplie pour au moins un certain laps de temps ou un certain nombre d'interrogations.

29. Dispositif selon l'une des revendications 20 à 28, **caractérisé en ce que** une logique de commande (60) commande la deuxième résistance (R2).

30. Dispositif selon la revendication 29, **caractérisé en ce que** la logique de commande (60) enregistre, pendant l'entrée des données, le nombre de cadences moyennant la fluctuation, liée avec chaque cadence, du courant qui passe à travers la première, la deuxième et la troisième résistance (R1, R2, R3) et qui sert à la formation de l'information d'entrée digitale, de sorte que l'information d'entrée digitale est disponible aussi bien dans le système de traitement de données électroniques (1) que dans la logique de commande (60).

31. Dispositif selon l'une des revendications 20 à 30, **caractérisé en ce que** la première résistance (R1) comprend un premier commutateur électronique (S1) et une quatrième résistance (R4) connectée en série à ce dernier, ainsi qu'une cinquième résistance (R5), laquelle est connectée en parallèle au montage en série constitué par le premier commutateur électronique (S1) et la quatrième résistance (R4), la quatrième et la cinquième résistance (R4, R5), étant choisies de manière à ce que la première résistance (R1) est plus grande ou plus petite que la première valeur seuil (G1) lorsque le premier commutateur électronique (S1) est ouvert ou fermé, et la deuxième résistance (R2) comprend un deuxième commutateur électronique (S2) et une sixième résistance (R6) connectée en série à ce dernier, ainsi qu'une septième résistance (R7), laquelle est connectée en parallèle au montage en série constitué par le deuxième commutateur électronique (S2) et la sixième résistance (R6), la sixième et la septième résistance (R6, R7), étant choisies de manière à ce que la deuxième résistance est plus grande ou plus petite que la deuxième valeur limite (G2) lorsque le deuxième commutateur électronique est ouvert ou fermé.

32. Dispositif selon l'une des revendications 20 à 30, **caractérisé en ce que**
la première résistance (R1) comprend un premier commutateur et une quatrième résistance (R4) connectée en série à ce dernier, ainsi qu'une cinquième résistance (R5), laquelle est connectée en parallèle au montage en série constitué par le premier commutateur et la quatrième résistance (R4), la quatrième et la cinquième résistance (R4, R5), étant choisies de manière à ce que la première résistance (R1) est plus grande ou plus petite que la première valeur seuil (G1), lorsque le premier commutateur électronique (S1) est ouvert ou fermé, et la deuxième résistance (R2) comprend un deuxième commutateur, ainsi qu'une septième résistance (R7), laquelle est connectée en parallèle au deuxième commutateur, le deuxième commutateur étant connecté ou entre le pôle (8) de la source de tension et la première résistance (R1) ou entre le deuxième pôle (9) de la source de tension et la troisième résistance (R3) et la septième résistance (R7) étant choisie de manière à ce que la deuxième résistance (R2) est plus grande ou plus petite que la deuxième valeur de seuil (G2), lorsque le deuxième commutateur est ouvert ou fermé.

33. Dispositif selon l'une des revendications 20 à 32, **caractérisé en ce que**
le système de traitement de données électroniques (1) peut émettre des données via la sortie (3), dans la mesure où la sortie (3) commande la première résistance (R1) de façon à ce que celle-ci exécute au moins une cadence, de manière à ce que le courant qui passe à travers la première, la deuxième et la
troisième résistance (R1, R2, R3) est soumis à des fluctuations au rythme de la cadence ou des cadences, fluctuations dont le nombre est enregistré et sert à la formation d'une information de sortie numérique.

34. Dispositif selon l'une des revendications 29 ou 30, **caractérisé en ce que**
la logique de commande (60) est partie intégrante d'un appareil de programmation (70).

35. Dispositif selon l'une des revendications 20 à 34, **caractérisé en ce**
**que** l'alimentation en tension du système de traitement de données électroniques (1) s'effectue via un convertisseur de niveau (100).
